(19) Europäisches Patentamt
European Patent Office
Office européen des brevets

(11) EP 4 332 644 A1

(12) # EUROPEAN PATENT APPLICATION
published in accordance with Art. 153(4) EPC

(43) Date of publication:
**06.03.2024 Bulletin 2024/10**

(21) Application number: **22795309.8**

(22) Date of filing: **10.03.2022**

(51) International Patent Classification (IPC):
***G02B 5/02*** (2006.01) ***B32B 7/023*** (2019.01)
***C08J 5/18*** (2006.01) ***G02B 1/115*** (2015.01)
***G02B 5/00*** (2006.01)

(52) Cooperative Patent Classification (CPC):
**B32B 7/023; C08J 5/18; C08J 7/04; G02B 1/115; G02B 5/00; G02B 5/02**

(86) International application number:
**PCT/JP2022/010646**

(87) International publication number:
**WO 2022/230386 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 JP 2021075781**

(71) Applicant: **Kimoto Co., Ltd.**
**Saitama 338-0013 (JP)**

(72) Inventors:
- **TACHIBANA, Kazutoshi**
  **Saitama-shi, Saitama 338-0013 (JP)**
- **SUZUKI, Sho**
  **Saitama-shi, Saitama 338-0013 (JP)**
- **KATO, Tatsuya**
  **Saitama-shi, Saitama 338-0013 (JP)**

(74) Representative: **Strehl Schübel-Hopf & Partner**
**Maximilianstrasse 54**
**80538 München (DE)**

(54) **MOLDED MULTILAYER DIFFUSION FILM**

(57) The present invention provides, for example, a molded diffusion laminated film which is excellent in shieldability and designability and which is according to a new design concept. A molded diffusion laminated film 100 of one embodiment of the present invention includes a laminated product including at least a substrate film 11, a molded diffusion layer 21 provided on one surface 11a of the substrate film 11, and a colored layer 31 provided on other surface 11b of the substrate film 11, in which the molded diffusion layer 21 includes at least a first resin binder 22 and a light diffusing particle 23 dispersed in the first resin binder 22, and has a void V in the layer, and the ratio (T/t) of the average thickness T of the molded diffusion layer 21 to the average particle size t of the light diffusing particle 23 is 3.0 or more, and the colored layer 31 includes at least a second resin binder and a colorant dispersed in the second resin binder.

[Figure 1]

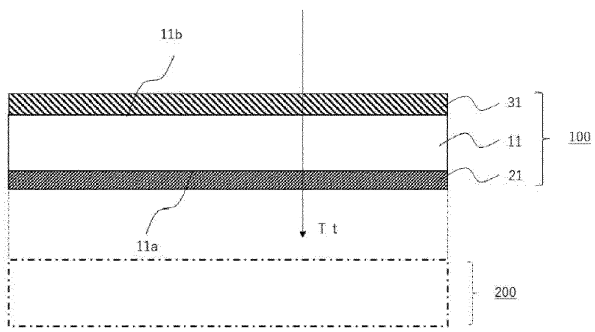




Processed by Luminess, 75001 PARIS (FR)

**Description**

[Technical Field]

The present invention relates to a molded diffusion laminated film and the like excellent in shieldability and designability.

[Background Art]

A device including a light-emitting diode (LED) has been conventionally known as a power-saving light-emitting device capable of emitting high-energy light. Light emitted from LED has strong directionality, and thus the light is demanded to be highly dispersed. A device including a light-emitting diode is used as a LED lighting device for an automotive light, a refrigerator, a microwave oven, an indoor light, and the like. A LED lighting device is demanded to have particularly high dispersibility (see, for example, Patent Literature 1).

[Citation List]

[Patent Literature]

[Patent Literature 1] Japanese Patent Laid-Open No. 2018-041638

[Summary of Invention]

[Technical Problem]

Meanwhile, an enhancement of interior design by adopting of indirect lighting has been studied in recent lighting use. For example, indirect lighting such as an ambient light, a task light, a task ambient light, a coop light, and an area light has been studied to be adopted in an in-car space, a cabin space, a sanitary space, a bedroom space, an office space, a lobby space, a restaurant, a theater room, a club with live music, and/or the like. Also in such lighting use, a photoelectric member using a photoelectric element, for example, a LED point source, a light guide bar, a light guide fiber, a light guide tube, a light guide ring, a light guide plate, or a lighting panel is adopted. Such indirect lighting allows light having strong directionality, of a light-emitting diode (LED) or the like, to be highly diffused, and thus is suppressed in dazzle and glaring and reduced in oppressive feeling in a space due to soft light, to create a staid atmosphere, or create high-class feeling, or create a romantic atmosphere, as compared with direct lighting. Such indirect lighting use is also demanded hereafter to achieve both realization of design having feeling of uniformity with peripheral design and internal shieldability from the viewpoint of an enhancement of interior design.

Such a tendency has been remarkably recognized in black-based home appliance use, black-based information communication terminal use, and/or recent in-vehicle use, theater room use and/or the like where a black-based interior material is frequently used. In fact, in such each use, black-based interior material and exterior material each having a piano black tone, a black metal tone, or the like are frequently used for, for example, an exterior panel, an operation panel and a panel around a display or the like, an interior panel, and a dashboard.

Meanwhile, an in-vehicle camera, infrared radar, millimeter-wave radar, an ultrasonic sensor, LiDAR (Light Detection and Ranging) and/or the like has/have been progressively adopted as a part of an advanced driver assistance system (ADAS) or an automated driving (AD) system for recent vehicles, transport instruments and/or the like, in order to sense the situation where a vehicle is placed. LiDAR is a remote sensing (sensing from a remote location with a sensor) system where an object is irradiated with light such as near-infrared light, visible light or ultraviolet light and the reflection light is captured by a light-receiving element to measure the distance. The sensor used therefor is obtained by forming a photoelectric element, a transmitter, a light-receiving element, an antenna, or the like to a module, and application of a hard coating film, a diffusion film or the like to also a surface of such a sensor module is studied. Such sensing use is also demanded hereafter to achieve both realization of design having feeling of uniformity with peripheral design and internal shieldability of a portion covered with a hard coating film, a diffusion film or the like in a case where such hard coating film, diffusion film or the like is provided.

The present invention has been made in view of the above problems. In other words, an object of the present invention is to provide, for example, a molded diffusion laminated film which is excellent in shieldability and designability and which is according to a new design concept.

An object of one aspect of the present invention is to provide, for example, a molded diffusion laminated film which is excellent in internal shieldability in turn off of a light source such as a photoelectric element and which exhibits a design having high-class feeling even in turn on or turn off of a light source such as a photoelectric element and can

be enhanced in feeling of uniformity of designability with design of peripheral interior material, exterior material, and the like.

An object of another aspect of the present invention is to provide, for example, a molded diffusion laminated film which is excellent in internal shieldability in turn off of a light source such as a photoelectric element in indirect lighting such as an ambient light and which exhibits design having high-class feeling even in turn on or turn off of a light source such as a photoelectric element and can be enhanced in feeling of uniformity of designability with design of peripheral interior material, exterior material, and the like.

[Solution to Problem]

The present inventors have made intensive studies in order to solve the above problems. As a result, the inventors have found that the above problems can be solved by newly designing and using a molded diffusion laminated film including a predetermined colored layer and a predetermined molded diffusion layer, leading to completion of the present invention.

That is, the present invention provides various specific aspects represented below.

[1] A molded diffusion laminated film comprising a laminated product comprising at least: a substrate film; a molded diffusion layer provided on one surface of the substrate film; and a colored layer provided on other surface of the substrate film; wherein the molded diffusion layer comprises at least a first resin binder and a light diffusing particle dispersed in the first resin binder, and has a void in the layer, and a ratio (T/t) of an average thickness T of the molded diffusion layer to an average particle size t of the light diffusing particle is 3.0 or more; and the colored layer comprises at least a second resin binder and a colorant dispersed in the second resin binder.

[2] The molded diffusion laminated film according to [1], wherein the film has a haze (according to JIS K7361-1) of 90% or more.

[3] The molded diffusion laminated film according to [1] or [2], wherein the film has a total light transmittance (according to JIS K7361-1) of 30 to 70%, and the colored layer has a total light transmittance (according to JIS K7361-1) of 60 to 90%.

[4] The molded diffusion laminated film according to any one of [1] to [3], wherein a half-value angle $H_{40}$ at an elongation rate of 40% of the laminated product is within a range of a value equal to or more than a value lower by 25% than a value of a half-value angle $H_0$ before elongation and a value equal to or less than a value higher by 25% than the value of a half-value angle $H_0$ before elongation.

[5] The molded diffusion laminated film according to any one of [1] to [4], wherein the film has a reflectance at 550 nm measured with the colored layer being interposed of 10.0% or less.

[6] The molded diffusion laminated film according to any one of [1] to [5], wherein the light diffusing particle has an average particle size t of 0.5 to 10.0 $\mu$m.

[7] The molded diffusion laminated film according to any one of [1] to [6], wherein the molded diffusion layer has an average thickness T of 1.5 to 30 $\mu$m.

[8] The molded diffusion laminated film according to any one of [1] to [7], wherein a content rate of the light diffusing particle is 30% by mass or more and 80% by mass or less based on a total amount of a solid content of the molded diffusion layer.

[9] The molded diffusion laminated film according to any one of [1] to [8], wherein the colorant comprises carbon black having an average particle size $D_{50}$ of 0.01 to 2.0 $\mu$m.

[10] The molded diffusion laminated film according to any one of [1] to [9], wherein a content rate of the colorant is 0.1 to 10.0 parts by mass in terms of solid content based on 100 parts by mass of the entire resin component in the colored layer.

[11] The molded diffusion laminated film according to any one of [1] to [10], wherein the colored layer further comprises a matting agent.

[12] The molded diffusion laminated film according to [11], wherein a content rate of the matting agent is 1 to 15 parts by mass in terms of solid content based on 100 parts by mass of the entire resin component in the colored layer.

[13] The molded diffusion laminated film according to any one of [1] to [12], comprising at least an antireflection layer, the colored layer, the substrate film, and the molded diffusion layer in the listed order.

[Advantageous Effects of Invention]

According to the present invention, there can be provided, for example, a molded diffusion laminated film which is excellent in shieldability and designability and which is according to a new design concept, and a lighting device using the molded diffusion laminated film. The molded diffusion laminated film or the like of the present invention can be used to thereby allow design having high-class feeling to be realized, for example, even in turn on or turn off of a light source

such as a photoelectric element, and allow for an enhancement in feeling of uniformity of designability with designs of peripheral interior material, exterior material, and the like. Thus, such a molded diffusion laminated film or the like can be used to thereby allow various types of design to be realized in, for example, an in-car space, a cabin space, a sanitary space, a bedroom space, an office space, a lobby space, a restaurant, a theater room, and/or a club with live music.

[Brief Description of Drawings]

[Figure 1] A schematic cross-sectional view illustrating a molded diffusion laminated film 100.
[Figure 2] A schematic cross-sectional view illustrating a molded diffusion layer 21.
[Figure 3] A schematic cross-sectional view illustrating a molded diffusion layer 21 elongated.
[Figure 4] A schematic cross-sectional view illustrating a molded diffusion layer 21 further elongated.
[Figure 5] A schematic cross-sectional view illustrating the action in elongation of a conventional light diffusing film.
[Figure 6] A schematic cross-sectional view illustrating a molded diffusion laminated film 101.
[Figure 7] A SEM photograph of a cross section of a molded diffusion layer 21 at an elongation rate of 0%.
[Figure 8] A SEM photograph of a cross section of a molded diffusion layer 21 at an elongation rate of 40%.
[Figure 9] A SEM photograph of a cross section of a molded diffusion layer 21 at an elongation rate of 80%.

[Description of Embodiments]

Hereinafter, embodiments of the present invention will be described in detail with reference to the drawings. It is noted that a positional relationship among the left, right, top and bottom is based on a positional relationship illustrated in the drawings, unless particularly noted. A dimensional ratio in the drawings is not limited by a ratio illustrated. Herein, the following embodiments are illustrative for describing the present invention and the present invention is not limited thereto. The designation of any numerical value range, for example, "1 to 100", herein includes both the lower limit value "1" and the upper limit value "100". The same applies to the designations of other numerical value ranges.

<Molded diffusion laminated film>

Figure 1 is a schematic cross-sectional view illustrating schematic configurations of a molded diffusion laminated film 100 of one embodiment of the present invention. The molded diffusion laminated film 100 of the present embodiment includes a laminated product including at least a substrate film 11, a molded diffusion layer 21 provided on one surface 11a of the substrate film 11, and a colored layer 31 provided on other surface 11b of the substrate film 11. The molded diffusion laminated film 100 is provided on a light-emitting member 200 including a LED element as a photoelectric element.

The molded diffusion laminated film 100 of the present embodiment has a laminated structure (three-layered structure) where the molded diffusion layer 21, the substrate film 11, and the colored layer 31 are at least arranged in the listed order. In the laminated structure, the colored layer 31 is disposed on the outermost surface on the front of the molded diffusion laminated film 100, and is disposed in the state of being exposed on the outermost surface of the molded diffusion laminated film 100. The molded diffusion layer 21 is disposed on the outermost surface on the rear of the molded diffusion laminated film 100, and is disposed in the state of being exposed on the outermost surface of the molded diffusion laminated film 100. A surface of the molded diffusion layer 21 and a surface of the colored layer 31 may be each, if necessary, subjected to any optional surface treatment(s) such as an antistatic treatment, an antifouling treatment, an antibacterial treatment, and/or an antireflection treatment. Any optional layer(s) such as an antistatic layer, a protection layer, an antifouling layer, an antibacterial layer, an antireflection film, and/or a print layer may be, if necessary, provided on the surface of the molded diffusion layer 21 and the colored layer 31.

The phrase "provided on one (other) surface of ... " is herein meant to encompass not only an aspect where the molded diffusion layer 21 and the colored layer 31 are respectively disposed directly on surfaces (for example, surface 11a and surface 11b) of substrate film 11, as in the present embodiment, but also an aspect where any optional layer(s) not illustrated (for example, a primer layer and/or an adhesive layer) are/is interposed between the surface 11a of the substrate film 11 and the molded diffusion layer 21 and/or between the surface 11b of the substrate film 11 and the colored layer 31 to thereby allow the molded diffusion layer 21 and the colored layer 31 to be disposed away from the substrate film 11. The laminated structure including at least the molded diffusion layer 21 and the colored layer 31 is meant to encompass not only a structure where only the molded diffusion layer 21 and the colored layer 31 are directly laminated on the substrate film 11, but also such a structure where optional layer(s) described above are/is further provided among the layers of the three-layered structure.

(Substrate film)

The substrate film 11 supports the molded diffusion layer 21 and the colored layer 31. The material of the substrate film 11 is not particularly limited in terms of the type thereof as long as the substrate film can support the molded diffusion layer 21 and the colored layer 31. A synthetic resin film is preferably used and a thermoplastic resin film is more preferably used from the viewpoint of, for example, dimension stability, mechanical strength, and weight saving. Specific examples of the synthetic resin film include respective films of polyester such as a polyethylene terephthalate resin, a polybutylene terephthalate resin and a polyethylene naphthalate resin, an ABS (acrylonitrile-butadiene-styrene) film, a polyimide film, a polyamide film, a polyamide imide film, a polystyrene film, a polycarbonate film, and a polyvinyl chloride film. A (meth)acrylic film, a nylon-based film, a polyolefin-based film such as a polyethylene or polypropylene film, a polyurethane-based film, a cellulose-based film such as a triacetyl cellulose film, a norbornene-based film, a polysulfone-based film, a polyphenylenesulfide-based film, a polyethersulfone-based film, or a polyether ether ketone-based film can also be used. Such a film can be used singly or in any combinations and ratios of two or more kinds thereof. A laminated film as any combination thereof can also be suitably used. The concept "(meth)acrylic" herein encompasses both acrylic and methacrylic. In particular, the substrate film 11 here used is suitably any of a polyester film, a polyimide film, a polycarbonate film, a (meth)acrylic film, and a laminated film as any combination thereof.

In a case where the molded diffusion laminated film 100 is stretched, the substrate film 11 is preferably a non-stretched film which is not stretched, particularly, not biaxially stretched. In a case where the substrate film 11 is, for example, wound up in a roll shape in production, the substrate film may be slightly stretched in the course of such winding. However, the substrate film 11 herein, when not stretched or biaxially stretched, corresponds to the non-stretched film herein. The glass transition temperature of the resin of the substrate film 11 is preferably 100 to 200°C, more preferably 120 to 180°C, further preferably 140 to 155°C. The glass transition temperature of the resin of the substrate film 11 is in the above range and thus stretching under heating conditions is easily performed.

The glass transition temperature of the resin of the substrate film 11 is not particularly limited, and is preferably 100 to 200°C, more preferably 120 to 180°C, further preferably 140 to 155°C. The glass transition temperature of the resin of the substrate film 11 is in the above range and thus stretching under heating conditions is easily performed.

The appearance of the substrate film 11 may be any of transparent, semi-transparent, colorless, and colored, is not particularly limited, and is preferably one high in translucency. Specifically, the film is preferably a transparent resin film having a total light transmittance Tt (according to JIS K7361-1) of 80% or more, more preferably 85% or more, further preferably 90% or more, particularly preferably 92% or more, in perpendicular incidence in the thickness direction of the substrate film 11, namely, at an incident angle of 0°. The total light transmittance Tt herein means a value measured with a haze meter (for example, NDH4000 (manufactured by Nippon Denshoku Industries Co., Ltd.)).

The thickness of the substrate film 11 can be appropriately set depending on required performance and application, and is not particularly limited. The thickness of the substrate film 11 is preferably 10 μm or more, more preferably 50 μm or more, further preferably 80 μm or more, particularly preferably 100 μm or more from the viewpoint of weight saving and film thinning, and the upper limit is preferably 2 mm or less, more preferably 1 mm or less, further preferably 500 μm or less, particularly preferably 300 μm or less. The surfaces of the substrate film 11 can also be, if necessary, subjected to any of various known surface treatments such as an anchor treatment and a corona treatment, from the viewpoint of an enhancement in adhesiveness to the colored layer 31 and the molded diffusion layer 21. The substrate film 11 may be a substrate film where an easily adhesive layer is provided on a surface, from the same viewpoint.

(Molded diffusion layer)

As illustrated in Figure 2, the molded diffusion layer 21 includes at least a first resin binder 22 and a light diffusing particle 23 which is dispersed in the first resin binder 22 and which has an average particle size t. In order that the above-mentioned shieldability and designability are provided, the ratio (T/t, hereinafter, sometimes simply referred to as "ratio T/t".) between the average thickness T of the molded diffusion layer 21 and the average particle size t of the light diffusing particle 23 is 3.0 or more and thus a large number of voids V are formed in the molded diffusion layer 21. While one is exemplified in the present embodiment, where the molded diffusion layer 21 is provided on only one surface 11a of the substrate film 11, the molded diffusion layer 21 may also be provided on each of both one surface 11a and other surface 11b of the substrate film 11.

The molded diffusion layer 21 thus configured is formed so that the light diffusing particle 23 is stacked in the thickness direction of the molded diffusion layer 21, thus realizes high light scattering properties, and as a result, allows for enhancements in shieldability and designability of the molded diffusion laminated film 100. In other words, the molded diffusion layer 21 exhibits a high haze and therefore is high in diffuseness of light, and also exhibits a high half-value angle and therefore, even after processing at a high elongation rate, for example, processing to a curved surface having a high radius of curvature or a flat surface having a high elongation rate during molding, asperity is formed on the molded diffusion layer 2 and a reduction in half-value angle after elongation is suppressed, and thus diffuseness of light after

processing at a high elongation rate is kept high. The half-value angle (degrees) is an angle at which the half intensity $I_{1/2}$ is obtained relative to the intensity $I_0$ in transmission of front light at an angle of 0 degrees to a light source, through the molded diffusion layer 21.

Any known material can be used as the material constituting the molded diffusion layer 21, and the type thereof is not particularly limited. The material can generally constitute the molded diffusion layer 21, as a cured product of a resin composition including at least the first resin binder 22 and the light diffusing particle 23.

The first resin binder 22 may be a thermoplastic resin or may be a thermosetting resin, and preferably includes a thermoplastic resin. Examples of the thermoplastic resin include an ABS resin, a norbornene resin, a silicone resin, a nylon resin, a polyvinyl acetal resin, a polycarbonate resin, a modified polyphenylene ether resin, a polybutylene terephthalate resin, a polyethylene terephthalate resin, a sulfone resin, an imide resin, a fluororesin, a styrene resin, an acrylic resin, a vinyl chloride resin, a vinyl acetate resin, a vinyl chloride-vinyl acetate copolymer resin, a polyester resin, a urethane resin, a rubber resin, a polyvinyl ether resin, a polyvinyl alcohol resin, a polyvinyl butyral resin, a polyvinylpyrrolidone resin, and a polyethylene glycol resin, but not particularly limited thereto. Such a thermoplastic resin can be used singly or in any combinations and ratios of two or more kinds thereof. The first resin binder 22 preferably includes at least one selected from the group consisting of a polyvinyl chloride resin, a polyvinylidene chloride resin, a polyvinyl alcohol resin, a polyvinyl acetal resin, a polyvinyl butyral resin, a polystyrene resin, an acrylic resin, a urethane resin, a silicone resin, and a fluororesin, and more preferably includes at least one selected from the group consisting of a polyvinyl acetal resin and an acrylic resin.

The glass transition temperature of the first resin binder 22 may be appropriately set depending on required performance, is not particularly limited, and is preferably a temperature lower than the glass transition temperature of the resin of the substrate film 11, more preferably 80 to 200°C, further preferably 90 to 150°C, particularly preferably 100 to 120°C.

The content rate of the first resin binder 22 may be appropriately set depending on required performance, is not particularly limited, and is preferably 25% by mass or more and 70% by mass or less, more preferably 30% by mass or more and 50% by mass or less, further preferably 32% by mass or more and 35% by mass or less based on the total amount of the solid content of the molded diffusion layer 21. In a case where the thermoplastic resin is used, the content rate of the thermoplastic resin may be appropriately set depending on required performance, is not particularly limited, and is preferably 60% by mass or more and 100% by mass or less, more preferably 70% by mass or more and 100% by mass or less, further preferably 80% by mass or more and 100% by mass or less based on the total amount of the first resin binder 22.

The light diffusing particle 23 is compounded in order to diffuse light in the molded diffusion layer 21. In the present embodiment, the light diffusing particle 23 means a particle having an average particle size t of 0.4 μm or more. The average particle size t of the light diffusing particle 23 is preferably 0.5 to 10.0 μm, more preferably 1.0 to 8.0 μm, further preferably 1.0 to 5.0 μm, particularly preferably 1.0 to 3.0 μm. The average particle size t of the light diffusing particle 23 is within the above range, and thus the half-value angle of the molded diffusion layer 21 is enhanced, and the average particle size t is within the range of 1.0 to 3.0 μm, and thus the half-value angle of the molded diffusion layer 21 is particularly increased. The average particle size t of the light diffusing particle herein means a median size ($D_{50}$) on a volume basis, measured with a laser diffraction type particle size distribution measurement apparatus (for example, trade name "SALD-7000" manufactured by Shimadzu Corporation). The median size ($D_{50}$) means a particle size at which 50% by volume from the smaller particle size in a particle distribution is achieved in cumulative calculation.

Any known material can be used as the material constituting the light diffusing particle 23, and the type thereof is not particularly limited. The material is generally preferably a particle having a higher glass transition temperature than the glass transition temperature of the resin of the substrate film 11, more preferably a thermoplastic resin particle or a thermosetting resin particle having the above glass transition temperature. In a case where the thermoplastic resin particle is used, the melting temperature of the thermoplastic resin particle is preferably a temperature higher by 20°C, more preferably a temperature higher by 40°C, further preferably a temperature higher by 50°C than the glass transition temperature of the resin of the substrate film 11. The light diffusing particle 23 can be used to thereby allow the shape of the light diffusing particle 23 to be retained and allow the retention rate of the half-value angle after stretching to be increased, in the case of stretching of the molded diffusion layer 21 under a heating temperature condition.

Examples of the resin used in the light diffusing particle 23 include a benzoguanamine resin, an acrylic resin, a styrene resin, a urethane resin, a nylon resin, a silicone resin, a melamine resin, an epoxy resin, a polycarbonate resin, and a thiophene resin, but not particularly limited thereto. Such a resin can be used singly or in any combinations and ratios of two or more kinds thereof. In particular, a benzoguanamine resin, an acrylic resin, a styrene resin, or a melamine resin is preferable. The light diffusing particle may be a solid particle or may be a hollow particle. The light diffusing particle 23 may contain a silica compound such as porous silica, alumina, talc, clay, calcium carbonate, magnesium carbonate, barium sulfate, aluminum hydroxide, an inorganic oxide such as titanium dioxide or zirconium oxide, an ultraviolet absorber, and/or other component, as a constituent component.

The light diffusing particle 23 may have a high refractive index or a low refractive index. In the case of a high

refractive index, the refractive index of the light diffusing particle 23 is preferably 1.40 to 1.70, more preferably 1.50 to 1.70, further preferably 1.55 to 1.70. In the case of a low refractive index, the refractive index of the light diffusing particle 23 is preferably 1.26 to 1.36, more preferably 1.28 to 1.34, further preferably 1.30 to 1.32.

The difference $|I_p - I_r|$ between the refractive index $I_p$ of the light diffusing particle 23 and the refractive index $I_r$ of the first resin binder 22 can be appropriately set depending on required performance, is not particularly limited, and is preferably 0.01 to 0.50, more preferably 0.05 to 0.40, further preferably 0.10 to 0.30. An increase in difference $|I_p-I_r|$ can result in an increase in internal diffusion in the molded diffusion layer 21, and therefore the value of the difference $|I_p-I_r|$ may be appropriately set depending on the intended elongation rate and the degree of surface diffusion at this elongation rate so that the half-value angle is retained before and after elongation. The refractive index $I_p$ is preferably higher than the refractive index $I_r$.

The content rate of the light diffusing particle 23 can be appropriately set depending on required performance, is not particularly limited, and is preferably 30% by mass or more and 80% by mass or less, more preferably 50% by mass or more and 75% by mass or less, further preferably 65% by mass or more and 70% by mass or less, particularly preferably 65% by mass or more and 68% by mass or less based on the total amount of the solid content of the molded diffusion layer 21. The content rate of the light diffusing particle 23 is in the above range and thus many such light diffusing particles 23 are packed in the molded diffusion layer 21, and asperity is easily formed on a surface of the molded diffusion layer 21 in elongation of the molded diffusion layer 23 and a high half-value angle is easily retained.

The content rate of the light diffusing particle 23 can be appropriately set depending on required performance, is not particularly limited, and is preferably 40 parts by mass or more and 400 parts by mass or less, more preferably 100 parts by mass or more and 300 parts by mass or less, further preferably 180 parts by mass or more and 240 parts by mass or less, particularly preferably 200 parts by mass or more and 240 parts by mass or less based on 100 parts by mass of the solid content of the first resin binder 22. The content rate of the light diffusing particle 23 is in the above range, and thus many such light diffusing particles 23 are packed in the molded diffusion layer 21, and asperity is easily formed on a surface of the molded diffusion layer 21 in elongation of the molded diffusion layer 23 and a high half-value angle is easily retained.

The molded diffusion layer 21 may include an inorganic particle (hereinafter, sometimes simply referred to as "inorganic fine particle".) having an average particle size of less than 0.4 μm. The average particle size can be here measured by the same method as in the average particle size t of the light diffusing particle 23. It is noted that an average particle size of less than 0.4 μm leads to almost no contribution to light diffuseness. The inorganic fine particle is preferably an inorganic oxide fine particle. Examples of the inorganic oxide include lead carbonate hydroxide ($2PbCO_3Pb(OH)_2$) (refractive index 1.94 to 2.09), titanium oxide (refractive index 2.71), zirconium oxide (refractive index 2.4), zinc oxide (refractive index 1.95), and aluminum oxide (refractive index 1.76), but not particularly limited thereto. Such an inorganic oxide can be used singly or in any combinations and ratios of two or more kinds thereof.

The inorganic fine particle is used for, for example, adjustment of the refractive index. In this case, the refractive index of the inorganic fine particle is preferably 1.9 or more, more preferably 2.0 or more, further preferably 2.3 or more. Such an inorganic fine particle may be used singly or in combinations of two or more kinds thereof.

The inorganic fine particle may be one exhibiting white. Such an inorganic fine particle exhibiting white is used to thereby allow the molded diffusion layer 21 to exhibit white, reduce the variation in brightness near a light source of a backlight apparatus, and LED lighting, and de-emphasize light leakage. Examples of such an inorganic fine particle exhibiting white include zirconium oxide, titanium oxide, and zinc oxide. Such an inorganic fine particle can be used singly or in any combinations and ratios of two or more kinds thereof. In particular, zirconium oxide and titanium oxide are preferable.

The primary particle size of the inorganic fine particle is not particularly limited, and is preferably 10 to 50 nm. Such a particle in the order of nanometer, when dispersed in the molded diffusion layer 21, is almost included as an aggregate in the molded diffusion layer 21.

The content of the inorganic fine particle can be appropriately set depending on required performance, is not particularly limited, and is preferably 40 to 500 parts by mass, more preferably 120 to 300 parts by mass, further preferably 160 to 240 parts by mass based on 100 parts by mass of the solid content of the first resin binder 22.

The molded diffusion layer 21 may contain various additives known in the art as long as the effects of the present invention are not excessively impaired. Examples of such various additives include a surface conditioner, a lubricant, a fluorescent whitener, a flame retardant, an antibacterial agent, a mildew-proofing agent, an ultraviolet absorber, a light stabilizer, a thermal stabilizer, an antioxidant, a plasticizer, a leveling agent, a fluidity controlling agent, a defoaming agent, a surfactant, a dispersant, a storage stabilizer, a crosslinking agent, and a silane coupling agent, but not particularly limited thereto. Examples of the lubricant include hydrocarbon lubricants such as polyethylene, paraffin, and wax; fatty acid-based lubricants such as stearic acid and 12-hydroxystearic acid; amide-based lubricants such as stearic acid amide, oleic acid amide, and erucic acid amide; ester-based lubricants such as butyl stearate and monoglyceride stearate; alcohol-based lubricants; solid lubricants such as metal soap, talc, and molybdenum disulfide; particles of silicone resins, and particles of fluororesins such as polytetrafluoroethylene wax and polyvinylidene fluoride, but not

particularly limited thereto. In particular, an organic lubricant is particularly preferably used. In a case where an ultraviolet curing type resin or an electron beam curing type resin is used as a binder resin, for example, a sensitizer such as n-butylamine, triethylamine, or tri-n-butyl phosphine, and/or an ultraviolet absorber may also be used. The content rate thereof is not particularly limited, and is preferably generally 0.01 to 5% by mass in terms of solid content relative to the entire resin component included in the molded diffusion layer 21.

Any method known in the art can be used for the method for producing the above-mentioned molded diffusion layer 21, and is not particularly limited. For example, one surface 11a of the substrate film 11 can be coated with a resin composition (coating liquid) including the first resin binder 22 and the light diffusing particle 23, and, if necessary, a solvent by a conventionally known coating method such as doctor coating, dip coating, roll coating, bar coating, die coating, blade coating, air knife coating, kiss coating, spray coating, or spin coating, and the resultant can be, if necessary, dried, and thereafter subjected to a curing treatment, to thereby provide the molded diffusion layer 21 on the substrate film 11. The coating liquid here used can be obtained by compounding various solvents according to an ordinary method. Such a solvent here used can be one known in the art, for example, water; a ketone-based solvent such as methyl ethyl ketone, methyl isobutyl ketone, or cyclohexanone; an ester-based solvent such as methyl acetate, ethyl acetate, or butyl acetate; an ether-based solvent such as methyl cellosolve or ethyl cellosolve; an alcohol-based solvent such as methyl alcohol, ethyl alcohol, or isopropyl alcohol, or a mixed solvent thereof. The coating film obtained by such coating can be, if necessary, subjected to, for example, an ionizing radiation treatment, a heat treatment, and/or a pressure treatment to thereby form the molded diffusion layer 21.

A resin composition (coating liquid) including the thermoplastic resin, the first resin binder 22 and the light diffusing particle 23, and, if necessary, a solvent can be subjected to shaping on the substrate film 11, to thereby obtain a laminated product as a shaped article where the molded diffusion layer 21 is provided on the substrate film 11. A known method can be applied to the shaping method, and is not particularly limited. For example, a known molding method such as press molding, drawing molding, pressure molding, vacuum molding, insert molding, or film insert molding can be applied to feed and cure the resin composition to and on the substrate film 11, thereby obtaining the laminated product as a shaped article. The colored layer 31, the antireflection layer, and the like can also be similarly shaped, or the colored layer 31, the antireflection layer, and the like can also be provided after a shaped article of the substrate film 11 and the molded diffusion layer 21 is obtained by shaping. As one example, the molded diffusion layer 21 can be formed on one surface 11a of the substrate film 11, thereafter the colored layer 31 can be formed on other surface 11b of the substrate film 11, the antireflection layer or the like can be, if necessary, further formed on the colored layer 31, and the resulting laminated product (a laminated product having the antireflection layer or the like, the colored layer 31, the substrate film 11, the molded diffusion layer 21, the print layer, and the like in the listed order) can be subjected to insert molding or the like to thereby obtain a shaped article having a predetermined shape.

The average thickness T of the molded diffusion layer 21 can be appropriately set depending on required performance, is not particularly limited, and is preferably 1.5 to 30 μm, more preferably 3 to 20 μm, further preferably 5 to 15 μm. The average thickness T of the molded diffusion layer 21 is included in the above range, and thus a reduction in half-value angle due to processing at a high elongation rate can be more suppressed. The measurement method of the average thickness T is herein according to a measurement method described in Examples.

The ratio (T/t) of the average thickness T of the molded diffusion layer 21 to the average particle size t of the light diffusing particle 23 is 3.0 or more. The ratio T/t can be set to thereby allow for realization of the molded diffusion layer 21 which can be suppressed in reduction in half-value angle even after being processed at a high elongation rate. The ratio T/t is more preferably 3.3 or more, further preferably 3.8 or more. The ratio T/t is equal to or more than the lower limit value, and thus the light diffusing particle 23 is easily overlapped in the molded diffusion layer 21 and a half-value angle tends to be retained even in the case of elongation of the molded diffusion layer 21. The upper limit value of the ratio T/t is not particularly limited, and is preferably 20.0 or less, more preferably 15.0 or less, further preferably 10.0 or less. The ratio T/t is equal to or less than the upper limit value, and thus not only the molded diffusion layer 21 is easily formed, but also a half-value angle tends to be retained even in the case of elongation.

The action of the molded diffusion layer 21 will be described below. The molded diffusion laminated film 100 of the present embodiment can be provided on, for example, a surface of a display or a LED lighting device having a photoelectric element. The molded diffusion laminated film 100 can also be shaped, for example, elongated, under a heating condition. When the molded diffusion laminated film 100 is placed, an adherend surface sometimes has a curved surface having a high radius of curvature or a complicated shape, or a flat surface is sometimes present which is to be attached with the molded diffusion laminated film 100 being elongated. In a case where the molded diffusion laminated film 100 is thus provided on an adherend surface depending on the curved surface shape of the adherend surface and/or the attachment method, the molded diffusion laminated film 100 can be partially or entirely elongated. For example, in a case where a light guide bar, a light guide fiber, a light guide tube, a light guide ring, a light guide tube or the like of an ambient light or the like is covered, shaping is made under a heating condition depending on the curved surface shape and thus the molded diffusion laminated film 100 is partially or entirely elongated. In this shaping, the molded diffusion laminated film 100 is elongated depending on the shape of the curved surface. The molded diffusion laminated

film 100 of the present embodiment is provided with the molded diffusion layer 21, and thus the molded diffusion laminated film 100 can keep a high half-value angle even if subjected to the above elongation. In other words, the molded diffusion laminated film 100 of the present embodiment is provided with the molded diffusion layer 21, and thus can be suppressed in reduction in half-value angle even after being processed at a high elongation rate. Hereinafter, the detail will be described.

As illustrated in Figure 2, in a case where the molded diffusion laminated film 100 is not elongated, light is diffused in the molded diffusion layer 21 by an interface among the light diffusing particle 23, a void V and a surface. In this case, the light diffusing particle 23 in the molded diffusion layer 21 is relatively high in degree of contribution to light diffusion.

Figure 3 is a schematic cross-sectional view illustrating the molded diffusion layer 21 in elongation of the molded diffusion laminated film 100. When the molded diffusion layer 21 is elongated, the molded diffusion layer 21 is decreased in thickness and the light diffusing particle 23 is slightly reduced in contribution to light diffusion, whereas the void V in the molded diffusion layer 21 is enlarged and the contribution to light diffusion at the interface is relatively higher. In other words, while the contribution of the light diffusing particle 23 to light diffusion is relatively lower as the elongation rate is higher, the void V is larger and the contribution to light diffusion at the interface is higher as the elongation rate is higher. Thus, even if the molded diffusion layer 21 is elongated, light diffuseness before and after elongation is kept high as compared with conventional one.

Figure 4 is a schematic cross-sectional view illustrating the molded diffusion layer 21 in further elongation of the molded diffusion laminated film 100. When the molded diffusion layer 21 is further elongated, the thickness of the molded diffusion layer 21 is decreased and the contribution of the light diffusing particle 23 to light diffusion is further reduced, whereas not only the void V in the molded diffusion layer 21 is enlarged, but also the number of such voids V, although not illustrated, may also be increased, and furthermore a depressed portion S is formed on a surface of the molded diffusion layer 21. The depressed portion S is formed by breakage of the molded diffusion layer 21. Here, the ratio T/t is equal to or more than the above-mentioned predetermined value, and thus surface roughness due to exposure of the light diffusing particle 23 and surface roughness due to formation of the depressed portion S are formed to thereby contribute to an increase in light diffuseness. Thus, even if the molded diffusion layer 21 is further elongated, a factor for a decrease in light diffuseness and a factor for an increase in light diffuseness are mixed and present and thus light diffuseness before and after elongation is kept high as compared with conventional one.

Figure 5 is a schematic cross-sectional view illustrating the action in elongation of a conventional light diffusing film C1. A light diffusing film C1, in which the ratio T/t is less than a predetermined value, is here described as a conventional art. The light diffusing film C1 includes a light diffusing layer C3 containing a light diffusing particle C31 and a resin binder 32. When the light diffusing film C1 is elongated, the contribution of the light diffusing particle C31 to light diffusion is decreased. While the size of a depressed portion is enlarged due to the elongation, the contribution of the depressed portion to light diffusion is low. Moreover, the thickness of the light diffusing particle C31 is not thick and thus almost no void is formed in the light diffusing layer C3 and the contribution of enlargement of a void to light diffusion is low even if elongation is made. For the foregoing reasons, the diffusion film C1 as a conventional art is lower in contribution of each factor contributing to light diffusion by elongation and thus is extremely small in light diffuseness before and after elongation.

The haze is widely used as the index for evaluation of light diffuseness. However, in fact, even a light diffusing film exhibiting a high haze does not sometimes impart satisfactory light diffuseness, for example, in the case of a LED lighting device or the like. Herein, not only the haze, but also the half-value angle is then used for the index of light diffuseness. The reason for this is because there is paid attention to the following: the half-value angle is easily considerably reduced even when a reduction in haze is slight during elongation of the molded diffusion layer 21 in the case of a high radius of curvature or in the case of application to a portion high in elongation rate. The elongation rate of the molded diffusion laminated film 100 herein is a rate represented by the following expression (1).

$$\text{Elongation rate (\%)} = [\text{Length after elongation} - \text{Length before elongation}]/[\text{Length before elongation}] \times 100 \quad (1)$$

The elongation conditions and the half-value angle (degrees) are herein according to test methods described in Examples.

The half-value angle $H_0$ at an elongation rate of 0% is not particularly limited, and is preferably 10 degrees or more, more preferably 20 degrees or more, further preferably 30 degrees or more, particularly preferably 40 degrees or more. The upper limit value of the half-value angle $H_0$ is not particularly limited, and, for example, may be 70 degrees

or less, or may be 60 degrees or less.

The half-value angle $H_{40}$ at an elongation rate of 40% is not particularly limited, and is preferably 10 degrees or more, more preferably 20 degrees or more, further preferably 30 degrees or more, particularly preferably 40 degrees or more. The upper limit value of the half-value angle $H_{40}$ is not particularly limited, and, for example, may be 70 degrees or less, or may be 60 degrees or less.

The half-value angle $H_{60}$ at an elongation rate of 60% is not particularly limited, and is preferably 10 degrees or more, more preferably 20 degrees or more, further preferably 30 degrees or more, particularly preferably 40 degrees or more. The upper limit value of the half-value angle $H_{60}$ is not particularly limited, and, for example, may be 70 degrees or less, or may be 60 degrees or less.

The half-value angle $H_{80}$ at an elongation rate of 80% is not particularly limited, and is preferably 10 degrees or more, more preferably 20 degrees or more, further preferably 30 degrees or more, particularly preferably 40 degrees or more. The upper limit value of the half-value angle $H_{80}$ is not particularly limited, and, for example, may be 70 degrees or less, or may be 60 degrees or less.

The half-value angle $H_{120}$ at an elongation rate of 120% is not particularly limited, and is preferably 10 degrees or more, more preferably 20 degrees or more, further preferably 30 degrees or more, particularly preferably 40 degrees or more. The upper limit value of the half-value angle $H_{120}$ is not particularly limited, and, for example, may be 70 degrees or less, or may be 60 degrees or less.

The half-value angle $H_{40}$ at an elongation rate of 40% is not particularly limited, and is preferably within the range of a value equal to or more than a value lower by 25% than the value of the half-value angle $H_0$ before elongation and a value equal to or less than a value higher by 25% than the value of the half-value angle $H_0$ before elongation, more preferably within the range of a value equal to or more than a value lower by 20% than the value of the half-value angle $H_0$ before elongation and a value equal to or less than a value higher by 20% than the value of the half-value angle $H_0$ before elongation, further preferably within the range of a value equal to or more than a value lower by 15% than the value of the half-value angle $H_0$ before elongation and a value equal to or less than a value higher by 20% than the value of the half-value angle $H_0$ before elongation, particularly preferably within the range of a value equal to or more than a value lower by 10% than the value of the half-value angle $H_0$ before elongation and a value equal to or less than a value higher by 20% than the value of the half-value angle $H_0$ before elongation.

The half-value angle $H_{60}$ at an elongation rate of 60% is not particularly limited, and is preferably within the range of a value equal to or more than a value lower by 25% than the value of the half-value angle $H_0$ before elongation and a value equal to or less than a value higher by 25% than the value of the half-value angle $H_0$ before elongation, more preferably within the range of a value equal to or more than a value lower by 20% than the value of the half-value angle $H_0$ before elongation and a value equal to or less than a value higher by 20% than the value of the half-value angle $H_0$ before elongation, further preferably within the range of a value equal to or more than a value lower by 15% than the value of the half-value angle $H_0$ before elongation and a value equal to or less than a value higher by 20% than the value of the half-value angle $H_0$ before elongation, particularly preferably within the range of a value equal to or more than a value lower by 10% than the value of the half-value angle $H_0$ before elongation and a value equal to or less than a value higher by 20% than the value of the half-value angle $H_0$ before elongation.

The half-value angle $H_{80}$ at an elongation rate of 80% is not particularly limited, and is preferably within the range of a value equal to or more than a value lower by 25% than the value of the half-value angle $H_0$ before elongation and a value equal to or less than a value higher by 25% than the value of the half-value angle $H_0$ before elongation, more preferably within the range of a value equal to or more than a value lower by 20% than the value of the half-value angle $H_0$ before elongation and a value equal to or less than a value higher by 20% than the value of the half-value angle $H_0$ before elongation, further preferably within the range of a value equal to or more than a value lower by 15% than the value of the half-value angle $H_0$ before elongation and a value equal to or less than a value higher by 20% than the value of the half-value angle $H_0$ before elongation, particularly preferably within the range of a value equal to or more than a value lower by 10% than the value of the half-value angle $H_0$ before elongation and a value equal to or less than a value higher by 20% than the value of the half-value angle $H_0$ before elongation.

The half-value angle $H_{120}$ at an elongation rate of 120% is not particularly limited, and is preferably within the range of a value equal to or more than a value lower by 25% than the value of the half-value angle $H_0$ before elongation and a value equal to or less than a value higher by 25% than the value of the half-value angle $H_0$ before elongation, more preferably within the range of a value equal to or more than a value lower by 20% than the value of the half-value angle $H_0$ before elongation and a value equal to or less than a value higher by 20% than the value of the half-value angle $H_0$ before elongation, further preferably within the range of a value equal to or more than a value lower by 15% than the value of the half-value angle $H_0$ before elongation and a value equal to or less than a value higher by 20% than the value of the half-value angle $H_0$ before elongation, particularly preferably within the range of a value equal to or more than a value lower by 10% than the value of the half-value angle $H_0$ before elongation and a value equal to or less than a value higher by 20% than the value of the half-value angle $H_0$ before elongation.

The total light transmittance Tt (according to JIS K7361-1) at an elongation rate of 0% of the molded diffusion

layer 21, namely, the total light transmittance Tt in perpendicular incidence in the thickness direction of the molded diffusion layer 21, namely, at an incident angle of 0° is not particularly limited, and is preferably 50% or more, more preferably 60% or more, further preferably 65% or more, particularly preferably 70% or more from the viewpoint that the total light transmittance Tt of the molded diffusion laminated film 100 is realized. The upper limit value of the total light transmittance Tt at an elongation rate of 0% of the molded diffusion layer 21 is not particularly limited, and may be, for example, less than 99%, may be less than 95%, may be less than 85%, or may be less than 80%. The total light transmittance Tt can be measured by a method according to JIS K7361-1:1997.

The total light transmittance Tt (according to JIS K7361-1) at an elongation rate of 120% of the molded diffusion layer 21, namely, the total light transmittance Tt in perpendicular incidence in the thickness direction of the molded diffusion layer 21, namely, at an incident angle of 0° is not particularly limited, and is preferably 50% or more, more preferably 60% or more, further preferably 65% or more, particularly preferably 70% or more from the viewpoint that the total light transmittance Tt of the molded diffusion laminated film 100 is realized. The upper limit value of the total light transmittance Tt at an elongation rate of 120% of the molded diffusion layer 21 is not particularly limited, and may be, for example, less than 99%, may be less than 95%, may be less than 90%, may be less than 85%, may be less than 80%, or may be less than 70%.

The haze at an elongation rate of 0% of the molded diffusion layer 21 is not particularly limited, and is preferably 90% or more, more preferably 95% or more, further preferably 96% or more, particularly preferably 97% or more. The upper limit value of the haze at an elongation rate of 0% of the molded diffusion layer 21 is not particularly limited, and may be, for example, less than 100%. The haze can be measured by a method according to JIS K7136:2000. The haze herein means a value measured with a haze meter (for example, NDH4000 (manufactured by Nippon Denshoku Industries Co., Ltd.)).

The haze at an elongation rate of 120% of the molded diffusion layer 21 is not particularly limited, and is preferably 90% or more, more preferably 95% or more, further preferably 97% or more, particularly preferably 98% or more. The upper limit value of the haze at an elongation rate of 120% of the molded diffusion layer 21 is not particularly limited, and may be, for example, less than 100%.

The arithmetic average roughness (Ra) at an elongation rate of 0% of the molded diffusion layer 21 is not particularly limited, and is preferably 1000 nm or less, more preferably 800 nm or less, further preferably 600 nm or less. The lower limit value of the arithmetic average roughness at an elongation rate of 0% of the molded diffusion layer 21 is not particularly limited, and may be 200 nm. The arithmetic average roughness (Ra) is in this range, and thus the balance between diffusion in the surface and diffusion in the interior is favorably kept and the half-value angle is easily retained. The arithmetic average roughness (Ra) can be determined with an atomic force microscope "Nanocute system" (product name, manufactured by Hitachi High-Tech Science Corporation, probe: Si single-crystal probe, measurement mode: DFM mode, image processing: flat processing (XY) once) by a measurement method according to JIS B0601:2001.

The arithmetic average roughness (Ra) at an elongation rate of 120% of the molded diffusion layer 21 is not particularly limited, and is preferably 1500 nm or less, more preferably 1000 nm or less, further preferably 800 nm or less. The lower limit value of the arithmetic average roughness at an elongation rate of 120% of the molded diffusion layer 21 is not particularly limited, and may be 300 nm. The arithmetic average roughness (Ra) is in this range, and thus the balance between diffusion in the surface and diffusion in the interior is favorably kept and the half-value angle is easily retained.

(Colored layer)

The colored layer 31 of the present embodiment includes at least a second resin binder and a colorant dispersed in the second resin binder in order to allow the above-mentioned shieldability and designability to be provided. While one is exemplified in the present embodiment, where the colored layer 31 is provided on only one surface 11b of the substrate film 11, the colored layer 31 may also be provided on each of both one surface 11b and other surface 11a of the substrate film 11.

Any known material can be used as the material constituting the colored layer 31, and the type thereof is not particularly limited. The material can generally constitute the colored layer 31, as a cured product of a resin composition including at least the second resin binder and the colorant. Any known resin such as a thermoplastic resin, a thermosetting resin, or an ionizing radiation-curable resin can be used as the second resin binder. Such a resin can be used to form the colored layer 31, thereby allowing the colored layer 31 to function as a hard coating film allowing for an increase in surface hardness of the substrate film 11, enhancements in scratch resistance and wear resistance, and an increase in surface smoothness of the substrate film 11.

Examples of the thermoplastic resin and the thermosetting resin include saturated or unsaturated polyester-based resin, acrylic resin, acrylic urethane-based resin, polyester acrylate-based resin, polyurethane acrylate-based resin, epoxy acrylate-based resin, urethane-based resin, epoxy-based resin, vinyl resin, polycarbonate-based resin, cellulose-based resin, acetal-based resin, polyethylene-based resin, polystyrene-based resin, polyamide-based resin,

polyimide-based resin, melamine-based resin, phenol-based resin, and silicone-based resin, but not particularly limited thereto. Such a resin can be used singly or in any combinations and ratios of two or more kinds thereof.

The ionizing radiation-curable resin here used can be a photopolymerizable prepolymer which is to be cured by irradiation with ionizing radiation (ultraviolet light or electron beam). The photopolymerizable prepolymer, while can be used singly, is preferably used in combination with a photopolymerizable monomer and furthermore may be, if necessary, used together with auxiliary agent(s) such as a photopolymerization initiator, a photopolymerization promoter, and/or a sensitizer (for example, ultraviolet sensitizer), from the viewpoint of imparting or enhancing various performances, for example, an enhancement in crosslinking curability and adjustment of curing shrinkage.

A common photopolymerizable prepolymer is roughly classified to a cationic polymerization type and a radical polymerization type. Examples of the cationic polymerization type photopolymerizable prepolymer include an epoxy-based resin and a vinyl ether-based resin. Examples of the epoxy-based resin include a bisphenol-based epoxy resin, a novolac type epoxy resin, an alicyclic epoxy resin, and an aliphatic epoxy resin. Examples of the radical polymerization type photopolymerizable prepolymer include an acrylic prepolymer (hard prepolymer). Such a photopolymerizable prepolymer can be used singly or in any combinations and ratios of two or more kinds thereof. In particular, an acrylic prepolymer (hard prepolymer) having two or more acryloyl groups in one molecule, which is to be crosslinked and cured to thereby have a three-dimensional network structure, is preferable from the viewpoint of hard coating ability.

Examples of the acrylic prepolymer include urethane acrylate, polyester acrylate, epoxy acrylate, melamine acrylate, polyfluoroalkyl acrylate, and silicone acrylate, but not particularly limited thereto. Such an acrylic prepolymer can be used singly or in any combinations and ratios of two or more kinds thereof.

Examples of the urethane acrylate-based prepolymer include one obtained by esterifying a polyurethane oligomer obtained by a reaction of a polyether polyol or a polyester polyol with a polyisocyanate, according to a reaction with (meth)acrylic acid, but not particularly limited thereto. Such an urethane acrylate-based prepolymer can be used singly or in any combinations and ratios of two or more kinds thereof.

Examples of the polyester acrylate-based prepolymer include one obtained by esterifying a hydroxyl group of a polyester oligomer having a hydroxyl group at each of both terminals, obtained by condensation of a polyvalent carboxylic acid and a polyhydric alcohol, with a (meth)acrylic acid, and one obtained by esterifying a hydroxyl group at a terminal of an oligomer obtained by addition of an alkylene oxide to a polyvalent carboxylic acid, with a (meth)acrylic acid, but not particularly limited thereto. Such a polyester acrylate-based prepolymer can be used singly or in any combinations and ratios of two or more kinds thereof.

Examples of the epoxy acrylate-based prepolymer include one obtained by esterification due to a reaction of an oxirane ring of a bisphenol type epoxy resin or a novolac epoxy resin having a relatively low molecular weight, with a (meth)acrylic acid, but not particularly limited thereto. Such an epoxy acrylate-based prepolymer can be used singly or in any combinations and ratios of two or more kinds thereof.

Examples of the photopolymerizable monomer include a monofunctional acrylic monomer (for example, 2-ethylhexyl acrylate, 2-hydroxyethyl acrylate, 2-hydroxypropyl acrylate, and butoxyethyl acrylate), a bifunctional acrylic monomer (for example, 1,6-hexanediol diacrylate, neopentyl glycol diacrylate, diethylene glycol diacrylate, polyethylene glycol diacrylate, and hydroxypivalic acid ester neopentyl glycol diacrylate), and a tri- or higher functional acrylic monomer (for example, dipentaerythritol hexaacrylate, trimethylpropane triacrylate, and pentaerythritol triacrylate), but not particularly limited thereto. Such a photopolymerizable monomer can be used singly or in any combinations and ratios of two or more kinds thereof. The concept "(meth)acrylate" herein encompasses both acrylate and methacrylate.

Examples of the photopolymerization initiator, which is for use in the radical polymerization type photopolymerizable prepolymer and the photopolymerizable monomer, include acetophenone, benzophenone, Michler's ketone, benzoin, benzyl methyl ketal, benzoyl benzoate, hydroxycyclohexyl phenyl ketone, 2-methyl-1-(4-(methylthio)phenyl)-2-(4-morpholinyl)-1-propane, $\alpha$-acyloxime ester, and a thioxanthone compound, but not particularly limited thereto. Examples of the photopolymerization initiator for the cationic polymerization type photopolymerizable prepolymer include a compound including an onium such as an aromatic sulfonium ion, an aromatic oxosulfonium ion, or an aromatic iodonium ion, and an anion of tetrafluoroborate, hexafluorophosphate, hexafluoroantimonate, hexafluoroarsenate or the like, but not particularly limited thereto. Such an initiator can be used singly or in any combinations and ratios of two or more kinds thereof.

Examples of the photopolymerization promoter include p-dimethylaminobonzoic acid isoamyl ester and p-dimethylaminobonzoic acid ethyl ester. Examples of the ultraviolet sensitizer include n-butylamine, triethylamine, and tri-n-butyl phosphine, but not particularly limited thereto. Such promoter and sensitizer can be each used singly or in any combinations and ratios of two or more kinds thereof.

The amount of such auxiliary agent(s) compounded is not particularly limited, and may be appropriately set usually in the range from 0.2 to 10 parts by mass based on 100 parts by mass in total of the above-mentioned photopolymerizable prepolymer and photopolymerizable monomer.

Alternatively, the colored layer 31 here used can also be a cured film of an ionizing radiation-curable organic/inorganic hybrid hard coating agent (hereinafter, also simply referred to as "hybrid hard coating agent".). The hybrid

hard coating agent is not particularly limited, and examples thereof include one including a reactive silica particle (hereinafter, also simply referred to as "reactive silica particle".) having a surface into which at least a photosensitive group having photopolymerization reactivity is introduced. Examples of the photosensitive group having photopolymerization reactivity can include a polymerizable unsaturated group typified by a (meth)acryloyloxy group. The hybrid hard coating agent may also be one including a photopolymerization reactive compound with the photosensitive group having photopolymerization reactivity, introduced into the surface of the reactive silica particle, for example, an unsaturated organic compound having a polymerizable unsaturated group. Such a hybrid hard coating agent can be used in the form of a liquid mixture in which the reactive silica particle or the unsaturated organic compound having a polymerizable unsaturated group is mixed with or dissolved in a known solvent.

The average particle size of the reactive silica particle is not particularly limited, and is preferably 0.001 to 0.1 μm, more preferably 0.001 to 0.01 μm. Such a reactive silica particle here used can be, for example, one where a compound having a hydrolyzable silyl group, a polymerizable unsaturated group, and groups represented by the following general formulae (1) and (2) in its molecule (hereinafter, also referred to as "polymerizable unsaturated group-modified hydrolyzable silane".) is chemically bound to powdery silica or colloidal silica serving as a base material, via a silyloxy group. In other words, the polymerizable unsaturated group-modified hydrolyzable silane, whose hydrolyzable silyl group is subjected to a hydrolysis reaction and thus is taken with a silica particle to generate a silyloxy group by chemical binding, can be used for the reactive silica particle. Examples of the hydrolyzable silyl group include an alkoxysilyl group, a carboxysililate silyl group such as an acetoxysilyl group, a halogenated silyl group such as a chlorosilyl group, an aminosilyl group, an oximsilyl group, and a hydridesilyl group, but not particularly limited thereto. Examples of the polymerizable unsaturated group include an acryloyloxy group, a methacryloyloxy group, a vinyl group, a propenyl group, a butadienyl group, a styryl group, an ethynyl group, a cinnamoyl group, a malate group, and an acrylamide group, but not particularly limited thereto.

$$-X-\underset{\underset{\displaystyle Y}{\|}}{C}-NH- \qquad \cdot\cdot\cdot(1)$$

wherein X represents -NH-, an oxygen atom, or a sulfur atom and Y represents an oxygen atom or a sulfur atom, provided that, when X is an oxygen atom, Y is a sulfur atom.

$$-NH-\underset{\underset{\displaystyle O}{\|}}{C}-O- \qquad \cdot\cdot\cdot(2)$$

Examples of the unsaturated organic compound having a polymerizable unsaturated group can include a polyvalent unsaturated organic compound having two or more polymerizable unsaturated groups in its molecule, or a monovalent unsaturated organic compound having one polymerizable unsaturated group in its molecule.

Examples of the polyvalent unsaturated organic compound include ethylene glycol di(meth)acrylate, diethylene glycol di(meth)acrylate, glycerol di(meth)acrylate, glycerol tri(meth)acrylate, 1,4-butanediol di(meth)acrylate, 1,6-hexanediol di(meth)acrylate, neopentyl glycol di(meth)acrylate, trimethylolpropane tri(meth)acrylate, dicyclopentanyl di(meth)acrylate, pentaerythritol tri(meth)acrylate, pentaerythritol tetra(meth)acrylate, dipentaerythritol hexa(meth)acrylate, dipentaerythritol monohydroxy penta(meth)acrylate, ditrimethylolpropane tetra(meth)acrylate, diethylene glycol di(meth)acrylate, polyethylene glycol di(meth)acrylate, tripropylene glycol di(meth)acrylate, and polypropylene glycol di(meth)acrylate.

Examples of the monovalent unsaturated organic compound include methyl (meth)acrylate, ethyl (meth)acrylate, propyl (meth)acrylate, butyl (meth)acrylate, 2-ethylhexyl (meth)acrylate, isodecyl (meth)acrylate, lauryl (meth)acrylate, stearyl (meth)acrylate, allyl (meth)acrylate, cyclohexyl (meth)acrylate, methyl cyclohexyl (meth)acrylate, isobornyl (meth)acrylate, 2-hydroxyethyl (meth)acrylate, 2-hydroxypropyl (meth)acrylate, glycerol(meth)acrylate, glycidyl (meth)acrylate, benzyl (meth)acrylate, 2-ethoxyethyl (meth)acrylate, 2-(2-ethoxyethoxy)ethyl (meth)acrylate, butoxyethyl (meth)acrylate, 2-methoxyethyl (meth)acrylate, methoxydiethylene glycol (meth)acrylate, methoxytriethylene glycol (meth)acrylate, methoxypolyethylene glycol (meth)acrylate, 2-methoxypropyl (meth)acrylate, methoxydipropylene glycol (meth)acrylate, methoxytripropylene glycol (meth)acrylate, methoxypolypropylene glycol (meth)acrylate, polyethylene glycol (meth)acrylate, and polypropylene glycol (meth)acrylate.

The cured film of the hybrid hard coating agent can contain, in addition to the reactive silica particle and the

photopolymerization reactive compound, for example, the above-mentioned auxiliary agent(s), such as the photopolymerization initiator, the photopolymerization promoter, and/or the sensitizer (for example, ultraviolet sensitizer), and/or, for example, the thermoplastic resin, the thermosetting resin, and/or the ionizing radiation-curable resin. Such preferable materials and the amounts thereof compounded are as described above, and the description thereof overlapped is here omitted.

A colorant is dispersed in the second resin binder of the colored layer 31. The colorant is to not only impart any color tone to the molded diffusion laminated film 100, but also adjust the total light transmittance Tt (according to JIS K7361-1) within a predetermined range. The colorant here used can be appropriately selected from known colorants, depending on required performance, and the type thereof is not particularly limited. Such a colorant can be used singly or in any combinations and ratios of two or more kinds thereof.

The colorant here used is preferably a black particle from the viewpoint that each color tone of the colored layer 31 and the molded diffusion laminated film 100 can be adjusted to a staid dark color having high-class feeling (black color). Examples of the black particle include magnetite-based black, copper/iron/manganese-based black, titanium black, carbon black, and aniline black, but not particularly limited thereto. In particular, a black resin particle, titanium black, carbon black, and aniline black are preferable, carbon black and aniline black are more preferable. The carbon black here is one produced by any of various known production methods, such as oil furnace black, lamp black, channel black, gas furnace black, acetylene black, thermal black, or Ketjen black, but the type thereof is not particularly limited. Conductive carbon black is particularly preferably used from the viewpoint that conductivity is imparted or charging due to static electricity is prevented. Carbon black has a long history, simple carbon black substances and carbon black dispersions of various grades are commercially available from, for example, Mitsubishi Chemical Corporation, Asahi Carbon Co., Ltd., Mikuni Color Ltd., Resino Color Industry Co., Ltd., Cabot Corporation, and Degussa AG, and the carbon black here used may be appropriately selected therefrom depending on required performance and application.

The particle size of the colorant may be appropriately set depending on required performance and the like from the viewpoint of the total light transmittance Tt, dispersibility, film-forming properties, handleability, and the like, and is not particularly limited, and the average particle size $D_{50}$ is preferably 0.01 to 2.0 $\mu$m, more preferably 0.05 to 0.1.0 $\mu$m, further preferably 0.08 to 0.5 $\mu$m. For example, a carbon black colorant having an average particle size $D_{50}$ of 0.01 to 2.0 $\mu$m is preferably used. Use of a colorant large in particle size tends to result in a lower total light transmittance Tt, and use of a colorant small in particle size tends to result in a higher total light transmittance Tt.

The content (total amount) of the colorant may also be again appropriately set depending on required performance and the like from the viewpoint of the total light transmittance Tt, dispersibility, film-forming properties, handleability, and the like, is not particularly limited, and is preferably 0.1 to 10.0 parts by mass, more preferably 0.5 to 8.0 parts by mass, further preferably 1.0 to 6.0 parts by mass in terms of solid content based on 100 parts by mass of the entire resin component included in the colored layer 31, from the viewpoint of the compounding balance between other essential components and optional components described above. A large amount of the colorant used tends to result in a lower total light transmittance Tt.

The colored layer 31 may contain, in addition to the above-mentioned second resin binder and colorant, a matting agent, for example, a silica compound such as porous silica, alumina, talc, clay, calcium carbonate, magnesium carbonate, barium sulfate, aluminum hydroxide, titanium dioxide, or zirconium oxide, from the viewpoint of an enhancement in antiglare properties. The matting agent can be compounded to thereby adjust the reflectance at 550 nm and also adjust the color tones (textures) of the colored layer 31 and the molded diffusion laminated film 100 from a dark color to a transparent color (clear color). The particle size of the matting agent may be appropriately set depending on required performance and the like from the viewpoint of the total light transmittance Tt, the reflectance at 550 nm, dispersibility, film-forming properties, handleability, and the like, and is not particularly limited, and the average particle size $D_{50}$ is preferably 1 to 20 $\mu$m, more preferably 1 to 15 $\mu$m, further preferably 2 to 10 $\mu$m. The matting agent, whose average particle size $D_{50}$ is a small particle size in the nanometer order, may be included. The amount of the matting agent compounded can be, if necessary, appropriately adjusted, is not particularly limited, and is preferably 1 to 15 parts by mass, more preferably 1 to 13 parts by mass, further preferably 1 to 10 parts by mass in terms of solid content based on 100 parts by mass of the entire resin component included in the colored layer 31.

The colored layer 31 may contain various additives known in the art, as long as the effects of the present invention are not excessively impaired. Examples of such various additives include a surface conditioner, a lubricant, a fluorescent whitener, a flame retardant, an antibacterial agent, a mildew-proofing agent, an ultraviolet absorber, a light stabilizer, a thermal stabilizer, an antioxidant, a plasticizer, a leveling agent, a fluidity controlling agent, a defoaming agent, a surfactant, a dispersant, a storage stabilizer, a crosslinking agent, and a silane coupling agent, but not particularly limited thereto. Examples of the lubricant include hydrocarbon-based lubricants such as polyethylene, paraffin, and wax; fatty acid-based lubricants such as stearic acid and 12-hydroxystearic acid; amide-based lubricants such as stearic acid amide, oleic acid amide, and erucic acid amide; ester-based lubricants such as butyl stearate and monoglyceride stearate; alcohol-based lubricants; solid lubricants such as metal soap, talc, and molybdenum disulfide; particles of silicone resins, and particles of fluororesins such as polytetrafluoroethylene wax and polyvinylidene fluoride, but not particularly limited

thereto. In particular, an organic lubricant is particularly preferably used. In a case where an ultraviolet curing type resin or an electron beam curing type resin is used as a binder resin, for example, a sensitizer such as n-butylamine, triethylamine, or tri-n-butyl phosphine, and/or an ultraviolet absorber may also be used. The content rate thereof is not particularly limited, and is preferably generally 0.01 to 5% by mass in terms of solid content relative to the entire resin component included in the colored layer 31.

The thickness of the colored layer 31 can be appropriately set depending on desired performance, is not particularly limited, and is preferably 0.1 to 20 μm, more preferably 0.5 to 15 μm, further preferably 2 to 12 μm.

The surface hardness of the colored layer 31 can also be appropriately set depending on required performance, is not particularly limited, and is preferably HB or more, more preferably F or more, further preferably H or more in a case where hard coating ability is demanded. The value of the surface hardness of the colored layer 31 is herein a value represented as a pencil scratching value (pencil hardness) measured by a method according to JIS-K5600 (1999).

Any method known in the art can be used for the method for producing the colored layer 31, and is not particularly limited. For example, one surface 11b of the substrate film 11 can be coated with a resin composition (coating liquid) including the second resin binder and the colorant by a conventionally known coating method such as doctor coating, dip coating, roll coating, bar coating, die coating, blade coating, air knife coating, kiss coating, spray coating, or spin coating, and the resultant can be, if necessary, dried, and thereafter subjected to a curing treatment, to thereby provide the colored layer 31 on the substrate film 11. The coating liquid here used can be obtained by compounding various solvents according to an ordinary method. Such a solvent here used can be one known in the art, for example, water; a ketone-based solvent such as methyl ethyl ketone, methyl isobutyl ketone, or cyclohexanone; an ester-based solvent such as methyl acetate, ethyl acetate, or butyl acetate; an ether-based solvent such as methyl cellosolve or ethyl cellosolve; an alcohol-based solvent such as methyl alcohol, ethyl alcohol, or isopropyl alcohol, or a mixed solvent thereof. The coating film obtained by such coating can be, if necessary, subjected to, for example, an ionizing radiation treatment, a heat treatment, and/or a pressure treatment to thereby form the colored layer 31.

A resin composition at least containing one or more selected from the group consisting of the thermoplastic resin, the thermosetting resin, the ionizing radiation-curable resin, and the ionizing radiation-curable organic/inorganic hybrid hard coating agent, and the colorant can be subjected to shaping on the substrate film 11, to thereby obtain a laminated product as a shaped article where the colored layer 31 is provided on the substrate film 11. A known method can be applied to the shaping method, and is not particularly limited. For example, a known molding method such as press molding, drawing molding, pressure molding, vacuum molding, insert molding, or film insert molding can be applied to feed and cure the resin composition to and on the substrate film 11, thereby obtaining the laminated product as a shaped article. The molded diffusion layer 21, antireflection layer, and the like can also be similarly shaped, or the molded diffusion layer 21, the antireflection layer, and the like can also be provided after a shaped article of the substrate film 11 and the colored layer 31 is obtained by shaping. As one example, the colored layer 31 can be formed on one surface 11b of the substrate film 11, the antireflection layer or the like can be, if necessary, further formed on the colored layer 31, thereafter the molded diffusion layer 21 can be formed on other surface 11a of the substrate film 11, and the resulting laminated product (a laminated product having the antireflection layer or the like, the colored layer 31, the substrate film 11, the molded diffusion layer 21, and the like in the listed order) can be subjected to insert molding or the like to thereby obtain a shaped article having a predetermined shape.

A light source for use in irradiation with ionizing radiation is not particularly limited. For example, a super high-pressure mercury lamp, a high-pressure mercury lamp, a medium-pressure mercury lamp, a low-pressure mercury lamp, a carbon-arc lamp, a metal halide lamp, a xenon lamp, or an electron beam accelerator can be used. The amount of irradiation here can also be appropriately set depending on the type, output performance, and the like of the light source used, and is not particularly limited, and the amount of irradiation with ultraviolet light is generally a cumulative amount of light of about 100 to 6,000 $mJ/cm^2$, as a target.

A heat source for use in the heat treatment is also not particularly limited. Any of a contact system or a non-contact system can be suitably used. For example, a far-infrared heater, a short wavelength infrared heater, a medium wavelength infrared heater, a carbon heater, an oven, or a heat roller can be used. The treatment temperature in the heat treatment is not particularly limited, and is generally 80 to 200°C, preferably 100 to 150°C.

The total light transmittance Tt at an elongation rate of 0% of the colored layer 31, namely, the total light transmittance Tt (according to JIS K7361-1) in perpendicular incidence in the thickness direction of the colored layer 31, namely, at an incident angle of 0° is not particularly limited, and is preferably 60 to 90%, more preferably 65 to 85%, further preferably 67 to 83% from the viewpoint that the total light transmittance Tt of the molded diffusion laminated film 100 is realized. The total light transmittance Tt can be measured by a method according to JIS K7361-1:1997.

The total light transmittance Tt at an elongation rate of 120% of the colored layer 31, namely, the total light transmittance Tt (according to JIS K7361-1) in perpendicular incidence in the thickness direction of the colored layer 31, namely, at an incident angle of 0° is not particularly limited, and is preferably 60 to 90%, more preferably 65 to 85%, further preferably 67 to 83% from the viewpoint that the total light transmittance Tt of the molded diffusion laminated film 100 is realized.

The haze at an elongation rate of 0% of the colored layer 31 is not particularly limited, and is preferably 1 to 20%, more preferably 2 to 15%, further preferably 3 to 12%. The haze can be measured by a method according to JIS K7136:2000.

The haze at an elongation rate of 120% of the colored layer 31 is not particularly limited, and is preferably 1 to 20%, more preferably 2 to 15%, further preferably 3 to 12%.

(Other optional layer)

The antireflection layer, if necessary, provided is a layer having transparency in the visual light range and having the property of cancelling reflection light by means of an interference effect of light at a layer interface (hereinafter, referred to as "antireflection properties"). The antireflection layer can be thus further provided to thereby prevent or reduce reflection of external light and/or an external image. The antireflection layer having such antireflection properties, here adopted, can be not only a single-layered antireflection layer obtained by providing a low refractive index layer high in transparency at a thickness so that an optical thickness at a specific wavelength (main wavelength for the purpose of antireflection) is equal to one-fourth of the specific wavelength, but also a multi-layered antireflection layer obtained by appropriately laminating one or more of a high refractive index layer and a medium refractive index layer each having such an optical thickness based on the specific wavelength of the low refractive index layer. The optical thickness here mentioned is a thickness determined from the product nd of the refractive index n of a film and the mechanical thickness d.

Any material known in the art can be used as the material constituting the antireflection layer, and the type thereof is not particularly limited. For example, an oxide of Si, or any fluoride of Li, Na, Mg, Al, Ca and the like is known as the material constituting the low refractive index layer. Any simple substance of Ti, Cr, Zr, Ni, Mb and the like, or any oxide of Ti, Zn, Y, Zr, In, Sn, Sb, Hf, Ta, Ce, Pr, Nd and the like is known as the material constituting the high refractive index layer. Furthermore, any fluoride of La, Nd, Pb and the like is known as the material constituting the medium refractive index layer. A method involving providing the material and the like constituting the low, high or medium refractive index layer according to a vacuum film formation method such as a vapor deposition method, a sputtering method, or an ion plating method is known as the method for forming the antireflection layer. The antireflection layer can also be formed by appropriately selecting, for example, a silicon oxide sol prepared by hydrolysis of silicon alkoxide such as tetraethoxysilane, tetramethoxysilane, methyl triethoxysilane, or methyl trimethoxysilane, or a metal oxide sol prepared by hydrolysis of metal alkoxide other than silicon alkoxide, such as zirconia propoxide, aluminum isopropoxide, titanium butoxide, or titanium isopropoxide, and subjecting it to a coating method such as a blade coater method, a rod coater method, or a gravure coater method. A method can also be adopted which is a liquid coating method for providing the antireflection layer by coating with an antireflection paint such as a fluorine-containing resin, a fluoropolymer, or an alkoxysilane-based resin using a hydrolyzed product of alkoxysilane.

The thickness of the antireflection layer can be the thickness of the low/high/medium refractive index layers, if necessary, laminated, in which the optical thickness of the low/high/medium refractive index layers in the configuration is appropriately selected so as to be in the range from 0.01 to 0.8 μm, preferably 0.01 to 0.4 μm, in antireflection suitably performed in the visual light range. Herein, the central wavelength of light whose reflection is to be prevented is in the visual light range, therefore the refractive index n is about 1.40 in a case where $\lambda$ is set to 550 nm being the central wavelength of wavelengths in a range commonly called the visual light range and silicon oxide is used in an inorganic thin film, and thus the thickness d of the antireflection layer is about 0.1 μm.

The print layer, if necessary, provided is provided in order to, for example, impart a beautiful appearance image and identity, and is a decorative layer representing a line, a frame, a character, a symbol, a pattern, a picture, a trade name, an explanation, and/or the like. The print layer can be formed using, for example, an aqueous ink, an oil-based ink, or a sublimation ink according to a known printing method such as gravure printing, roll printing, spray printing, screen printing, or flexo printing. The print layer may be formed by monochromatic printing or multicolor printing, and may be formed by screen printing or solid printing.

The thickness of the print layer can be appropriately adjusted according to an ordinary method, and is not particularly limited. The thickness is generally preferably 0.01 to 200 μm, more preferably 0.05 to 150 μm, further preferably 0.1 to 100 μm.

(Various physical properties of molded diffusion laminated film)

A molded diffusion laminated film 100 of the present embodiment, configured as above, includes a laminated product including at least a substrate film 11, a molded diffusion layer 21 provided on one surface 11a of the substrate film 11, and a colored layer 31 provided on other surface 11b of the substrate film 11.

The total light transmittance Tt (according to JIS K7361-1) at an elongation rate of 0% of the molded diffusion laminated film 100 of the present embodiment, namely, the total light transmittance Tt at an elongation rate of 0% in perpendicular incidence in the thickness direction of the molded diffusion laminated film 100, namely, at an incident

angle of 0° is not particularly limited, and is preferably 30 to 70%, more preferably 35 to 65%, further preferably 40 to 60%, particularly preferably 45 to 55%.

The total light transmittance Tt (according to JIS K7361-1) at an elongation rate of 120% of the molded diffusion laminated film 100 of the present embodiment, namely, the total light transmittance Tt at an elongation rate of 120% in perpendicular incidence in the thickness direction of the molded diffusion laminated film 100, namely, at an incident angle of 0° is not particularly limited, and is preferably 30 to 70%, more preferably 35 to 65%, further preferably 40 to 60%, particularly preferably 45 to 55%.

The haze at an elongation rate of 0% of the molded diffusion laminated film 100 of the present embodiment is not particularly limited, and is preferably 90% or more, more preferably 95% or more, further preferably 96% or more, particularly preferably 97% or more. The upper limit value of the haze at an elongation rate of 0% of the molded diffusion laminated film 100 is not particularly limited, and may be, for example, less than 100%. In fact, the upper limit value may be defined by the detection limit of a measurement instrument. The haze can be measured by a method according to JIS K7136:2000. The haze herein means a value measured with a haze meter (for example, NDH4000 (manufactured by Nippon Denshoku Industries Co., Ltd.)).

The haze at an elongation rate of 120% of the molded diffusion laminated film 100 of the present embodiment is not particularly limited, and is preferably 90% or more, more preferably 95% or more, further preferably 97% or more, particularly preferably 98% or more. The upper limit value of the haze at an elongation rate of 120% of the molded diffusion laminated film 100 is not particularly limited, and may be, for example, less than 100%. In fact, the upper limit value may be defined by the detection limit of a measurement instrument.

The molded diffusion laminated film 100 of the present embodiment has a reflectance at 550 nm in the SCI mode, measured with the colored layer 31 being interposed, of preferably 10.0% or less, more preferably 9.0% or less, further preferably 8.0% or less, particularly preferably 7.0% or less. The reflectance at 550 nm herein means a value obtained by measurement with a spectrophotometric colorimeter (for example, CM-700d (manufactured by Konica Minolta, Inc.) in the SCI mode. Such a low-reflection surface allows for a more increase in internal shieldability, and allows design having high-class feeling to be exhibited even in turn on or turn off of a light source such as a photoelectric element and allows feeling of uniformity of designability with design of peripheral interior material, exterior material, and the like to be enhanced. When the reflectance at 550 nm is measured, the measurement is performed in a state where a black vinyl tape (VT386 manufactured by NICHIBAN Co., Ltd.) uniformly adheres onto a rear surface (onto the molded diffusion layer 21) by a squeegee or the like so that neither bubbles, nor foreign substances and the like are incorporated, in order to suppress the influence of reflection light from a surface on which the molded diffusion laminated film 100 as a measurement subject is placed. Much the same is true on measurement of the reflectance at 550 nm of the colored layer 31 itself, and the measurement is performed in a state where a black vinyl tape (VT386 manufactured by NICHIBAN Co., Ltd.) uniformly adheres onto a rear surface of the colored layer 31 by a squeegee or the like so that neither bubbles, nor foreign substances and the like are incorporated.

The molded diffusion laminated film 100 of the present embodiment has a reflectance at 550 nm in the SCI mode, measured with the colored layer 31 being interposed, of preferably 6% or less, more preferably 5% or less, further preferably 4% or less, particularly preferably 3% or less, in the state of being provided on a surface of an adherend such as a lighting instrument or a display, from the viewpoint that higher designability is obtained.

<Method of using molded diffusion laminated film>

The method of using the molded diffusion laminated film 100 of the present embodiment may be performed according to an ordinary method, and is not particularly limited. For example, a known method such as

(a) a preform method involving pressure-bonding the molded diffusion laminated film 100 on a surface of an adherend,
(b) an insert molding method involving disposing the molded diffusion laminated film 100 in a mold and pouring and molding a resin therein,
(c) a three-dimensional surface decoration shaping method involving pressing the molded diffusion laminated film 100 toward one surface of an adherend under a reduced pressure condition in a non-contact system to thereby laminate the film on the adherend

can be applied. The three-dimensional surface decoration shaping method can be performed by, for example, TOM molding machine "NGF-5012-RS" (manufactured by Fu-se Vacuum Forming). In particular, the insert molding method (b) or the three-dimensional surface decoration shaping method (c) is preferable, and the insert molding method (b) is more preferable.

The temperature in lamination of the molded diffusion laminated film 100 on an adherend in the present embodiment (for example, the temperature of a molding room in a decoration shaping machine) can be appropriately set depending on required performance, is not particularly limited, and is preferably 70 to 200°C. The temperature is more

preferably 100 to 160°C, further preferably 130 to 160°C. Such shaping is performed within the above temperature range, to thereby provide following to a surface of the adherend and elongation of the molded diffusion laminated film 100. Even if the adherend has a shape so that the elongation rate of the molded diffusion laminated film 100 is 80% or more or 120% or more, the molded diffusion laminated film 100 of the present embodiment can be suppressed in reduction in half-value angle due to the shaping.

<Variant>

The molded diffusion laminated film of the present invention can be carried out in various aspects as long as it has a laminated structure where the molded diffusion layer 21, the substrate film 11, and the colored layer 31 are at least arranged in the listed order.

For example, as illustrated in Figure 6, a mode of a molded diffusion laminated film 101 can also be carried out which has a laminated structure where an antireflection layer 41, the molded diffusion layer 21, the substrate film 11, and the colored layer 31 are at least arranged in the listed order.

The molded diffusion laminated film of the present invention can be widely used as a molded diffusion film for various members including photoelectric elements. Examples of such use typically include in-vehicle light diffusion use and light diffusion use for lighting, in which light having strong directionality is highly diffused, for example, light-emitting diode (LED) use, but such use is not particularly limited. The molded diffusion laminated film of the present invention can be applied as a molded diffusion film for various instruments using photoelectric elements, for example, a touch panel, an in-vehicle sensor, an in-vehicle camera, infrared radar, millimeter-wave radar, an ultrasonic sensor, and LiDAR. The molded diffusion laminated film can also be used as a molded diffusion film for a lighting instrument including a photoelectric element, such as a LED light source, a light guide bar, a light guide fiber, a light guide tube, a light guide ring, a light guide plate, or a lighting panel, for example, for indirect lighting such as an ambient light, a task light, a task ambient light, a coop light, or an area light, for example, in an in-car space, a cabin space, a sanitary space, a bedroom space, an office space, a lobby space, a restaurant, a theater room, and/or a club with live music.

[Examples]

Hereinafter, features of the present invention will be more specifically described with reference to Test Examples, Examples, and Comparative Examples, but the present invention is not limited thereto at all. In other words, materials, amounts of use, proportions, treatment details, treatment procedures, and the like indicated in the following Examples can be appropriately modified without departing from the gist of the present invention. The values of various production conditions and evaluation results in the following Examples each have the meaning as a preferable upper limit value or a preferable lower limit value in embodiments of the present invention, and a preferable range may also be a range defined by a combination of the upper limit or lower limit value and any value in the following Examples or values in the Examples.

[Measurement methods]

<Average thickness T of molded diffusion layer>

A cross section of the laminated film was observed at five locations at a magnification of 2,000x with SEM (Scanning Electron Microscope), and the average value of 50 points in total of 10 points with respect to each of the locations was calculated, and defined as the average thickness T of the molded diffusion layer.

<Half-value angle>

Measurement was made with optical scattering measurement equipment "MiniDiff V2" (product name, manufactured by Light Tec). The laminated film was left to still stand on a transmission light source so that molded diffusion layer served as a light incident surface, and a light receiving portion was placed thereon. An incident light source was used under measurement conditions of G (525 nm) and an angle of incident light, perpendicular to the laminated film, and the intensity of transmitted light in a measured view (-75 degrees to 75 degrees) was measured. The angle at which the half intensity $I_{1/2}$ the intensity $I_0$ of front light was achieved was measured, and the angle range in which light having more than half intensity was radiated was calculated, and defined as the half-value angle (degrees).

<Total light transmittance Tt and haze>

The total light transmittance Tt and the haze (Haze) of each of the laminated films were respectively measured

according to a measurement method according to JIS K7361-1:1997 and a measurement method according to JIS K7136:2000, with a haze meter "NDH4000" (product name, manufactured by Nippon Denshoku Industries Co., Ltd.), in which the molded diffusion layer of each of the laminated films served as a light incident surface.

[Production of laminated film]

<Examples 1 to 7 and Comparative Example 1>

Each laminated film of Examples 1 to 7 and Comparative Example 1 was obtained by mixing and stirring a light diffusing particle, a resin binder, and an appropriate amount of an organic solvent, as shown in Table 1, to obtain a coating liquid for a molded diffusion layer, and then coating a substrate film including a polycarbonate film having a thickness of 250 μm and a glass transition temperature of 150°C, by a bar coating method and drying the resultant so that the thickness after drying was a value shown in Table 1, to thereby form a molded diffusion layer (light diffusing layer). SEM photographs of a cross section of the laminated film of Example 5 are illustrated in Figures 7 to 9. Figure 7 is a SEM photograph of a cross section of the molded diffusion layer at an elongation rate of 0%. Figure 8 is a SEM photograph of a cross section of the molded diffusion layer at an elongation rate of 40%. Figure 9 is a SEM photograph of a cross section of the molded diffusion layer at an elongation rate of 80%.

<Reference Example 1>

After a coating liquid R1 for a molded diffusion layer, having the following formulation, was mixed and stirred, a substrate film including a polyethylene terephthalate film "Lumirror T60" (product name, manufactured by Toray Industries, INC.) having a thickness of 250 μm was coated with the coating liquid by a bar coating method and the resultant was dried so that the thickness after drying was 5 μm, to thereby form a light diffusing layer. Next, a surface of the substrate film, opposite to a surface on which the molded diffusion layer was formed, was coated with a coating liquid for a back-coating layer, having the following formulation, by a bar coating method so that the thickness after drying was 5 μm, and the resultant was dried to form a back-coating layer, thereby obtaining a laminated film of Reference Example 1.

(Coating liquid R1 for coating film for molded diffusion layer)

| | |
|---|---|
| · Acrylic polyol resin (solid content 50%, Tg 96°C, refractive index 1.51) | 6 parts by mass |
| • Acrylic polyol resin (solid content 50%, Tg 19°C, refractive index 1.49) | 14 parts by mass |
| • Polyisocyanate (solid content 60%) | 4 parts by mass |
| • Acrylic resin particle (average particle size 2 to 3 μm, refractive index 1.49) | 11 parts by mass |
| • Dilution solvent | Appropriate amount |
| (Coating liquid for back-coating layer) | |
| • Acrylic polyol resin (solid content 50%, Tg 65°C, refractive index 1.49) | 10 parts by mass |
| • Polyisocyanate (solid content 60%) | 2 parts by mass |
| • Acrylic resin particle (average particle size 5 μm, refractive index 1.49) | 0.1 parts by mass |
| • Dilution solvent | Appropriate amount |

[Evaluation]

<Elongation test>

A tensile test according to JIS K7127:1999 was performed as evaluation of shape followability, to measure the elongation rate of each of the laminated films. A sample was produced by cutting to a rectangular shape of 100 mm length × 25 mm width. Next, marking was made at an interval of length of 50 mm around the central portion of the sample, except for both ends, the sample was disposed on an apparatus with a temperature regulation mechanism disposed on a tensile tester "AGS-1kNX" (trade name, manufactured by Shimadzu Corporation) so that the marking portion was not sandwiched between chucks, the temperature of the sample was set to 160°C, and the tensile test was performed at a distance between chucks of 50 mm, a tensile speed of 200 mm/min, and each elongation rate of 0%, 40%, 60%, 80%, and 120%, to measure the half-value angle, the total light transmittance Tt at each of elongation rates of 0% and 120%, and the haze at each of elongation rates of 0% and 120%, and these were shown in Table 1.

[Table 1]

Table 1

| | | | Example 1 | | Example 2 | | Example 3 | | Example 4 | | Example 5 | | Example 6 | | Example 7 | | Comparative Example 1 | | Reference Example 1 | |
|---|---|---|---|---|---|---|---|---|---|---|---|---|---|---|---|---|---|---|---|---|
| Application liquid (% by mass) | Light diffusing particles | Type | A-1 | | A-1 | | A-1 | | A-1 | | A-1 | | A-2 | | A-3 | | A-1 | | A-4 | |
| | | Average particle diameter t (μm) | 2 | | 2 | | 2 | | 2 | | 2 | | 4 | | 5 | | 2 | | 2 | |
| | | Amount (% by mass) | 67 | | 61 | | 50 | | 33 | | 70 | | 67 | | 67 | | 67 | | 47 | |
| | Resin binder | Type | B-1 | | B-1 | | B-1 | | B-1 | | B-1 | | B-1 | | B-1 | | B-1 | | B-2 | |
| | | Amount (% by mass) | 33 | | 39 | | 50 | | 67 | | 30 | | 33 | | 33 | | 33 | | 53 | |
| Light diffusing layer film thickness T (μm) | | | 8 | | 8 | | 8 | | 8 | | 8 | | 13 | | 17 | | 4 | | 5 | |
| T/t ratio | | | 4.0 | | 4.0 | | 4.0 | | 4.0 | | 4.0 | | 3.3 | | 3.4 | | 2.0 | | 2.5 | |
| Evaluation | Half-value angle (°) *1 | Elongation rate | ° | Change rate | ° | Change rate | ° | Change rate | ° | Change rate | ° | Change rate | ° | Change rate | ° | Change rate | ° | Change rate | ° | Change rate |
| | | 0% | 43 | - | 43 | - | 41 | - | 32 | - | 50 | - | 20 | - | 16 | - | 37 | - | 10 | - |
| | | 40% | 50 | 16% | 49 | 14% | 41 | 0% | 31 | -3% | 51 | 2% | 20 | 0% | 17 | 6% | 42 | 15% | -*2 | - |
| | | 60% | 49 | 14% | 48 | 12% | 41 | 0% | 30 | -6% | 48 | -4% | 20 | 0% | 17 | 6% | 38 | 4% | - | - |
| | | 80% | 49 | 14% | 46 | 7% | 40 | -2% | 29 | -9% | 46 | -8% | 20 | 0% | 18 | 13% | 27 | -27% | - | - |
| | | 120% | 43 | 0% | 41 | -5% | 38 | -7% | 26 | -19% | 39 | -22% | 20 | 0% | 18 | 13% | 22 | -41 % | - | - |
| | Total light transmittance (%) | 0% | 75.52 | | 73.65 | | 76.56 | | 82.11 | | 69.01 | | 93.35 | | 96.66 | | 81.01 | | - | |
| | | 120% | 69.11 | | 69.42 | | 75.56 | | 86.90 | | 62.85 | | 92.96 | | 95.89 | | 77.07 | | - | |
| | Haze (%) | 0% | 98.59 | | 99.33 | | 99.29 | | 99.15 | | 99.40 | | 97.25 | | 96.20 | | 99.23 | | - | |
| | | 120% | 98.38 | | 99.19 | | 98.92 | | 98.92 | | 99.27 | | 97.49 | | 96.98 | | 98.23 | | - | |

*1 "%" in the Table represents elongation rate
*2 interrupted because of cracking of light diffusing layer.

(Light diffusing particle)

A-1: Benzoguanamine particle (average particle size ($D_{50}$) 2 μm, refractive index n = 1.67, specific gravity 1.4 g/$cm^3$, melting point 225°C or more)
A-2: Styrene particle (average particle size ($D_{50}$) 4 μm, refractive index n = 1.59, specific gravity 1.1 g/$cm^3$, decomposition temperature 250 to 270°C)
A-3: Acrylic particle (average particle size ($D_{50}$) 5 μm, refractive index n = 1.49, specific gravity 1.1 g/$cm^3$, decomposition temperature 250 to 270°C)
A-4: Acrylic particle (average particle size ($D_{50}$) 2 μm, refractive index n = 1.49, specific gravity 1.1 g/$cm^3$, decomposition temperature 250 to 270°C)

(Resin binder)

B-1: Acrylic resin (refractive index n = 1.49, specific gravity 1.1 g/$cm^3$, glass transition temperature 100°C)
B-2: Acrylic thermosetting resin (refractive index n = 1.49, specific gravity 1.1 g/$cm^3$)

It can be seen from the foregoing results of Examples and Comparative Examples that, according to the molded diffusion layer in the present invention, a reduction in half-value angle can be suppressed even after processing at a high elongation rate. It can also be seen according to comparison between Example 1 and Comparative Example 1 that the ratio T/t can be within a predetermined range to thereby allow for suppression of a reduction in half-value angle even after processing at a high elongation rate. It can be seen from the foregoing results of Example 1 to Example 5 that the half-value angle is kept even in elongation processing, over a wide content range of the light diffusing particle. It can be seen according to Examples 6 and 7 that, according to the laminated film according to the present embodiment, a reduction in half-value angle can be suppressed even after processing at a high elongation rate even if a light diffusing particle contains a styrene resin or an acrylic resin.

Next, an UV-curable resin, a polymerizable monomer, a polymerization initiator, carbon black having an average particle size $D_{50}$ of 250 nm as a colorant, and an appropriate amount of an organic solvent were mixed and stirred as shown in Table 2, to obtain a coating liquid for a colored layer. A surface of the substrate film of the laminated film of Example 5 or Reference Example 1, the surface being opposite to a surface on which the molded diffusion layer was formed, was coated with the resulting coating liquid for a colored layer by a bar coating method so that the thickness after drying was 3.5 μm, and the resultant was dried to form each colored layer, thereby producing each laminated film having the same structure as in Figure 1. The total light transmittance Tt, the haze, and the reflectance at 550 nm of each of the laminated films obtained in Example 5-1 and Example 5-2 and Reference Example 2, measured with the colored layer being interposed, are shown in Table 2. In Table 2, "phr" means part(s) by mass in terms of solid content based on 100 parts by mass of the entire resin component included in the colored layer.

[Table 2]

| | | | | Reference Example 2 | | Example 5-1 | | Example 5-2 | |
|---|---|---|---|---|---|---|---|---|---|
| Colored layer | UV-curable resin | % by mass | | 90.0 | | 90.0 | | 90.0 | |
| | Polymerizable monomer | % by mass | | 10.0 | | 10.0 | | 10.0 | |
| | Polymerization initiator | % by mass | | 3.6 | | 4.0 | | 4.0 | |
| | Colorant | phr | | 0.0 | | 1.4 | | 0.3 | |
| | Color tone | | | Clear color | | Black | | Black | |
| | Measurement items | | (Elongation rate) | | | | | | |
| | Total light transmittance | (%) | 0% | 93.4 | | 65.1 | | 84.0 | |
| | | | 120% | 93.3 | | 72.6 | | 72.5 | |
| | Haze | (%) | 0% | 0.4 | | 10.8 | | 3.3 | |
| | | | 120% | 0.5 | | 7.0 | | 6.7 | |
| | Reflectance at 550 nm (RC) SCI | (%) | | 10.4 | | 4.4 | | 4.5 | |
| Laminated film | Color tone | | | Clear color | | Black | | Black | |
| | Measurement items | | (Elongation rate) | ° | Change rate | ° | Change rate | ° | Change rate |
| | Half-value angle | (°) | 0% | 50 | - | 54 | - | 56 | - |
| | | | 120% | 39 | -22% | 42 | -22% | 45 | -22% |
| | Total light transmittance | (%) | 0% | 70.0 | | 40.3 | | 59.4 | |
| | | | 120% | 63.2 | | 35.5 | | 48.7 | |
| | Haze | (%) | 0% | 99.2 | | 99.3 | | 99.3 | |
| | | | 120% | 99.0 | | 99.3 | | 99.3 | |
| | Reflectance at 550 nm (RC) SCI | (%) | | 14.3 | | 6.2 | | 7.3 | |

The molded diffusion laminated films of Example 5-1 and Example 5-2, each corresponding to that of the present invention, not only shielded a light source and also ensured the amount of light in a wide region, but also allowed a light source to be hardly visible with the molded diffusion laminated film being interposed, in turn off of the light source, and exhibited design having feeling of uniformity with the periphery. The molded diffusion laminated films of Example 5-1 and Example 5-2 exhibited design having high-class feeling even in turn off, and was excellent in feeling of uniformity of designability with design of peripheral interior material, exterior material, and the like. On the contrary, the molded diffusion laminated film of Reference Example 2 was inferior in shieldability of a light source, was visible with the molded diffusion laminated film being interposed, in turn off of a light source, and exhibited design having no feeling of uniformity with the periphery.

[Industrial Applicability]

The molded diffusion laminated film or the like of the present invention is excellent in shieldability and designability, can allow design having high-class feeling to be realized even in turn on or turn off of a light source such as a photoelectric element, and can allow for an enhancement in feeling of uniformity of designability with design of peripheral interior material, exterior material, and the like, and therefore can be widely and effectively utilized as a molded diffusion

film for various members including photoelectric elements, and can be extremely effectively available as, for example, a molded diffusion laminated film for light diffusion in automobile use, a molded diffusion laminated film for light diffusion in lighting use, and a molded diffusion laminated film for light diffusion in display use, for example, for light-emitting diodes (LEDs) which highly diffuse light having strong directionality.

[Reference Signs List]

| | |
|---|---|
| 100 | molded diffusion laminated film |
| 11 | substrate film |
| 11a | surface |
| 11b | surface |
| 21 | molded diffusion layer |
| 22 | first resin binder |
| 23 | light diffusing particle |
| 31 | colored layer |
| 41 | antireflection layer |
| 51 | print layer |
| 101 | molded diffusion laminated film |
| 200 | light-emitting member |
| B | depressed portion |
| V | void |
| Tt | total light transmittance |

## Claims

1. A molded diffusion laminated film comprising a laminated product comprising at least: a substrate film; a molded diffusion layer provided on one surface of the substrate film; and a colored layer provided on other surface of the substrate film; wherein

   the molded diffusion layer comprises at least a first resin binder and a light diffusing particle dispersed in the first resin binder, and has a void in the layer, and a ratio (T/t) of an average thickness T of the molded diffusion layer to an average particle size t of the light diffusing particle is 3.0 or more; and
   the colored layer comprises at least a second resin binder and a colorant dispersed in the second resin binder.

2. The molded diffusion laminated film according to claim 1, wherein
   the film has a haze (according to JIS K7361-1) of 90% or more.

3. The molded diffusion laminated film according to claim 1 or 2, wherein

   the film has a total light transmittance (according to JIS K7361-1) of 30 to 70%, and
   the colored layer has a total light transmittance (according to JIS K7361-1) of 60 to 90%.

4. The molded diffusion laminated film according to any one of claims 1 to 3, wherein
   a half-value angle $H_{40}$ at an elongation rate of 40% of the laminated product is within a range of a value equal to or more than a value lower by 25% than a value of a half-value angle $H_0$ before elongation and a value equal to or less than a value higher by 25% than the value of a half-value angle $H_0$ before elongation.

5. The molded diffusion laminated film according to any one of claims 1 to 4, wherein
   the film has a reflectance at 550 nm measured with the colored layer being interposed of 10.0% or less.

6. The molded diffusion laminated film according to any one of claims 1 to 5, wherein
   the light diffusing particle has an average particle size t of 0.5 to 10.0 μm.

7. The molded diffusion laminated film according to any one of claims 1 to 6, wherein
   the molded diffusion layer has an average thickness T of 1.5 to 30 μm.

**8.** The molded diffusion laminated film according to any one of claims 1 to 7, wherein a content rate of the light diffusing particle is 30% by mass or more and 80% by mass or less based on a total amount of a solid content of the molded diffusion layer.

**9.** The molded diffusion laminated film according to any one of claims 1 to 8, wherein the colorant comprises carbon black having an average particle size $D_{50}$ of 0.01 to 2.0 $\mu$m.

**10.** The molded diffusion laminated film according to any one of claims 1 to 9, wherein a content rate of the colorant is 0.1 to 10.0 parts by mass in terms of solid content based on 100 parts by mass of the entire resin component in the colored layer.

**11.** The molded diffusion laminated film according to any one of claims 1 to 10, wherein the colored layer further comprises a matting agent.

**12.** The molded diffusion laminated film according to claim 11, wherein a content rate of the matting agent is 1 to 15 parts by mass in terms of solid content based on 100 parts by mass of the entire resin component in the colored layer.

**13.** The molded diffusion laminated film according to any one of claims 1 to 12, comprising at least an antireflection layer, the colored layer, the substrate film, and the molded diffusion layer in the listed order.

[Figure 1]

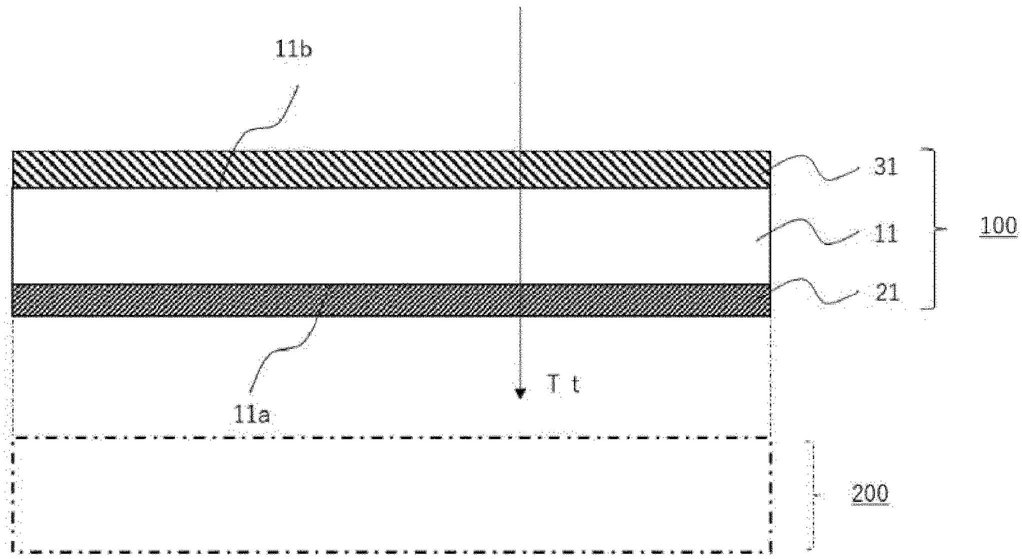


[Figure 2]

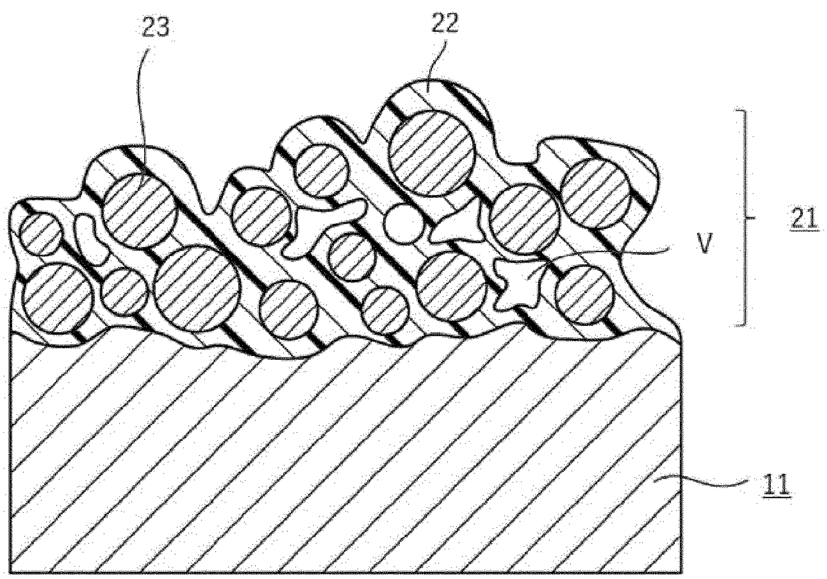

[Figure 3]

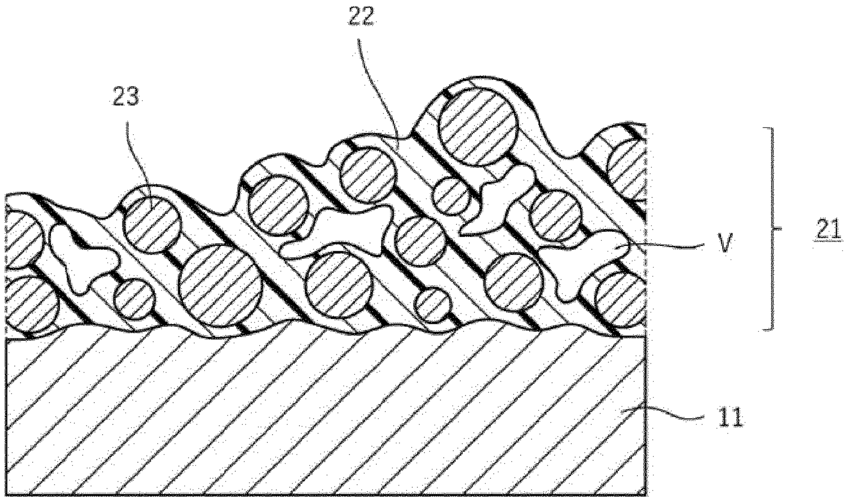


[Figure 4]

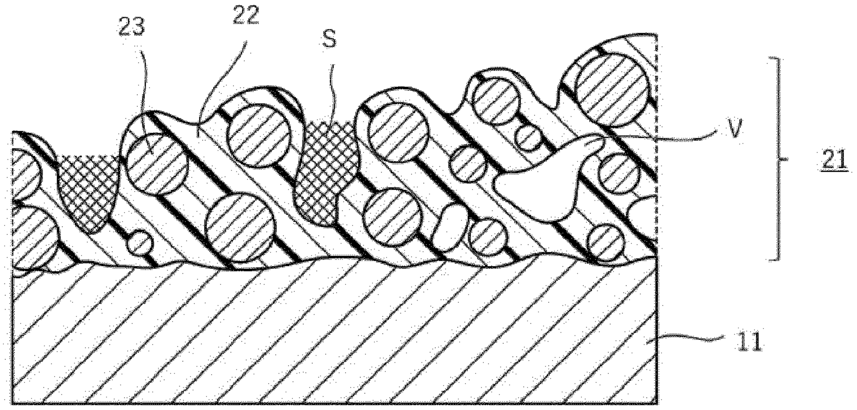


[Figure 5]

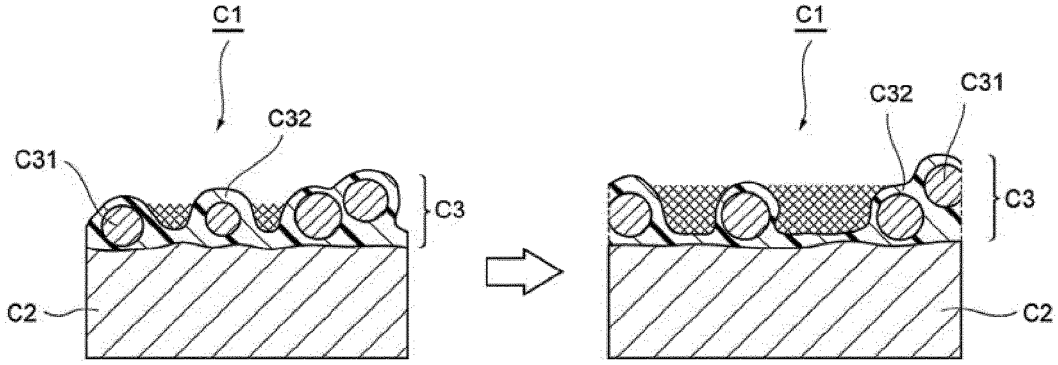

[Figure 6]

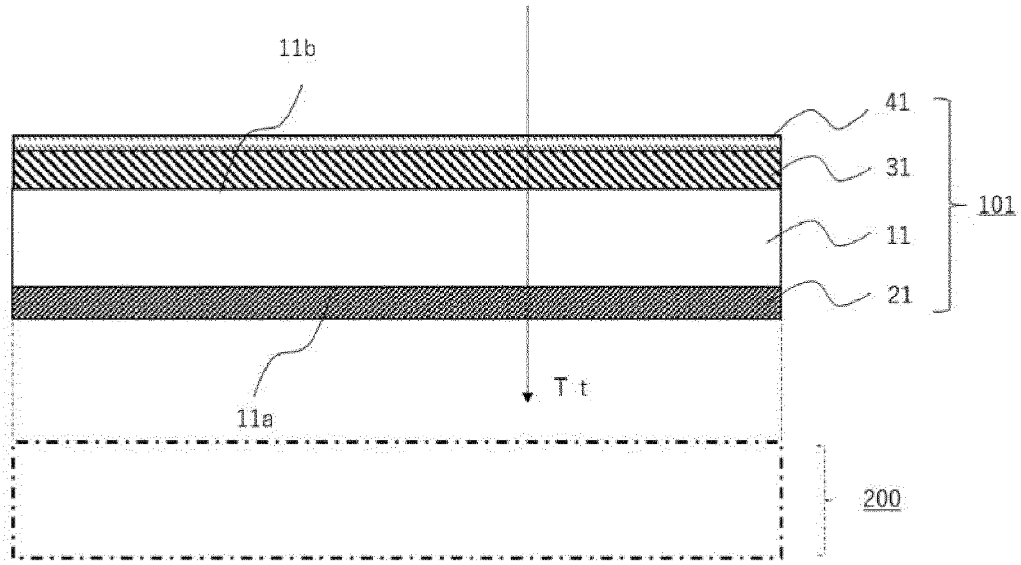


[Figure 7]

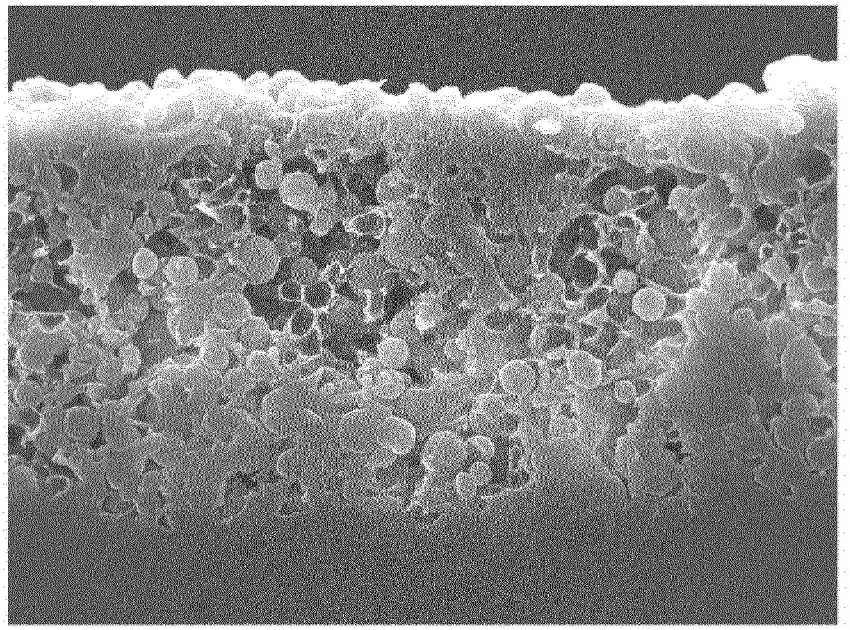

[Figure 8]

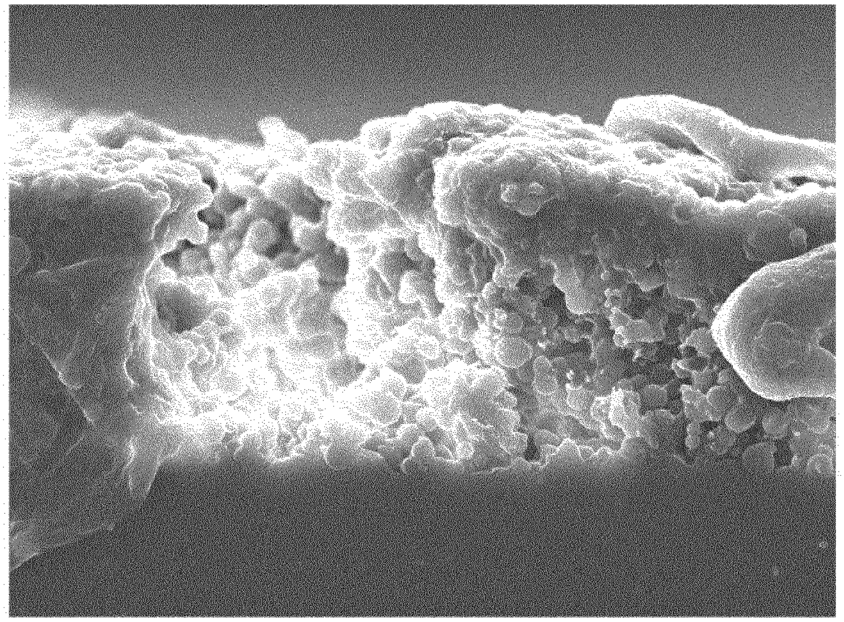

[Figure 9]

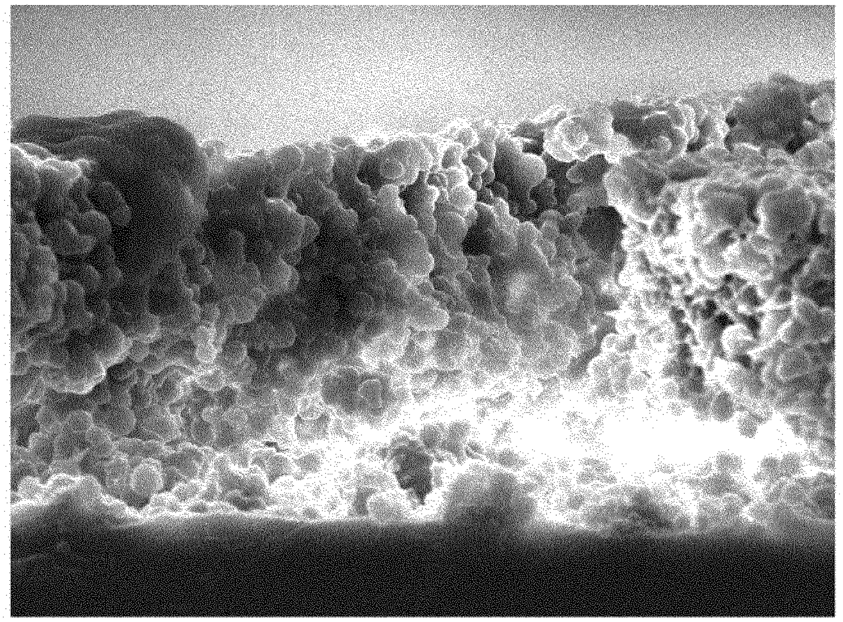

## INTERNATIONAL SEARCH REPORT

International application No.
**PCT/JP2022/010646**

**A. CLASSIFICATION OF SUBJECT MATTER**

***G02B 5/02***(2006.01)i; ***B32B 7/023***(2019.01)i; ***C08J 5/18***(2006.01)i; ***G02B 1/115***(2015.01)i; ***G02B 5/00***(2006.01)i
FI: G02B5/02 C; B32B7/023; C08J5/18; G02B1/115; G02B5/00 A

According to International Patent Classification (IPC) or to both national classification and IPC

**B. FIELDS SEARCHED**

Minimum documentation searched (classification system followed by classification symbols)

G02B5/02; B32B7/023; C08J5/18; G02B1/115; G02B5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-70714 A (NIPPON PAINT AUTOMOTIVE COATINGS CO LTD) 09 May 2019 (2019-05-09)<br>paragraphs [0096]-[0103], tables 1-2, examples 2-8, 10-13, 17-23 | 1-3, 5-13 |
| X | JP 2009-51203 A (SUMITOMO CHEMICAL CO LTD) 12 March 2009 (2009-03-12)<br>paragraphs [0036], [0042]-[0043], table 1, fig. 1, examples 1-2, 4, 12-13 | 1-13 |
| X | JP 2002-283510 A (DAINIPPON PRINTING CO LTD) 03 October 2002 (2002-10-03)<br>claims, paragraphs [0038], [0079], example 1 | 1-13 |
| X | JP 2011-175227 A (NIPPON CARBIDE IND CO INC) 08 September 2011 (2011-09-08)<br>paragraphs [0068]-[0069], [0078]-[0109], table 1, examples 1-13 | 1-13 |
| Y | WO 2015/079613 A1 (PANASONIC IP MAN CO LTD) 04 June 2015 (2015-06-04)<br>paragraph [0042], fig. 1, table 1, examples 1-4 | 1-13 |
| Y | WO 2013/018459 A1 (KUREHA CORPORATION) 07 February 2013 (2013-02-07)<br>paragraphs [0017], [0062]-[0063], [0077] | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2022** | **17 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/010646**

**C. DOCUMENTS CONSIDERED TO BE RELEVANT**

| Category* | Citation of document, with indication, where appropriate, of the relevant passages | Relevant to claim No. |
|---|---|---|
| Y | JP 2004-101712 A (THREE M INNOVATIVE PROPERTIES CO) 02 April 2004 (2004-04-02)<br>claims, paragraph [0001] | 1-13 |
| Y | JP 2014-203046 A (UNITIKA LTD) 27 October 2014 (2014-10-27)<br>claims, paragraphs [0001]-[0003] | 1-13 |
| A | JP 2002-264169 A (DAINIPPON PRINTING CO LTD) 18 September 2002 (2002-09-18)<br>entire text, all drawings | 1-13 |
| P, Y | WO 2021/084977 A1 (KIMOTO KK ) 06 May 2021 (2021-05-06)<br>claims, examples | 1-13 |

Form PCT/ISA/210 (second sheet) (January 2015)

**INTERNATIONAL SEARCH REPORT**
**Information on patent family members**

International application No.
**PCT/JP2022/010646**

| Patent document cited in search report | Publication date (day/month/year) | Patent family member(s) | Publication date (day/month/year) |
|---|---|---|---|
| JP 2019-70714 A | 09 May 2019 | WO 2019/070074 A1<br>CN 110651203 A<br>KR 10-2019-0133207 A | |
| JP 2009-51203 A | 12 March 2009 | (Family: none) | |
| JP 2002-283510 A | 03 October 2002 | (Family: none) | |
| JP 2011-175227 A | 08 September 2011 | (Family: none) | |
| WO 2015/079613 A1 | 04 June 2015 | US 2016/0282521 A1<br>paragraph [0044], fig. 1, table 1, examples 1-4<br>EP 3075800 A1<br>CN 105722925 A | |
| WO 2013/018459 A1 | 07 February 2013 | (Family: none) | |
| JP 2004-101712 A | 02 April 2004 | (Family: none) | |
| JP 2014-203046 A | 27 October 2014 | (Family: none) | |
| JP 2002-264169 A | 18 September 2002 | (Family: none) | |
| WO 2021/084977 A1 | 06 May 2021 | JP 2021-71646 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018041638 A